# EUROPÄISCHE PATENTSCHRIFT

(11) **EP 3 061 549 B1**
(45) Veröffentlichungstag und Bekanntmachung des Hinweises auf die Patenterteilung: **20.02.2019**
(21) Anmeldenummer: 15197966.3
(22) Anmeldetag: 04.12.2015
(51) Int. Cl.: B23B 31/177, B23B 31/26, F16H 25/18

(54) **ZUG- UND/ODER DRUCKSTANGE**
TRACTION AND/OR PLUNGER ROD
BARRE DE TRACTION ET/OU DE COMPRESSION

(30) Priorität: 25.02.2015 DE 102015102724
(43) Veröffentlichungstag der Anmeldung: 31.08.2016
(73) Patentinhaber: Röhm GmbH, 89567 Sontheim (DE)
(72) Erfinder: Kempter, Stefan, 89361 Landensberg (DE)
(74) Vertreter: Hentrich Patentanwälte PartG mbB

(56) Entgegenhaltungen:
- DE-A1-102011 116 818
- DE-A1-102012 201 723
- DE-B3-102004 053 033
- JP-A- 2007 145 063
- US-A- 4 577 522
- US-A- 5 526 710

## Beschreibung

Die Erfindung betrifft eine Zug- und/oder Druckstange, gemäß dem Oberbegriff des Patentanspruchs 1. Derartige Maschinenteile werden in der Spann- und Greiftechnik häufig eingesetzt, um eine axiale, d.h. entlang einer Längsachse orientierte Bewegung ausführen zu können um die betreffende Spann- oder Greifvorrichtung zwischen einer Spannkonfiguration und einer Lösekonfiguration umzuschalten.
Bekannt ist es dabei die axiale Bewegung der Bauteile mit Hilfe von Gewindeverbindungen zwischen Gewindestangen bzw. Gewindehohlstangen zu bewirken. Dies ist für eine Löseeinheit beispielsweise in der DE 10 2011 116 818 A1 beschrieben, wobei die axiale Bewegung der Lösestange durch einen Gewindetrieb aus zwei ineinandergreifenden Trapezgewinde realisiert ist. Diese Gewindeverbindungen weisen den Nachteil auf, dass die außenliegende Gewindehohlstange häufig verkantet aufgrund des großen vorherrschenden Spiels. Das Verkanten wird dabei auch dadurch verursacht, dass sich die Gewindeflanken je nach Stellung der Gewindemutter unterschiedlich stark miteinander in Eingriff befinden, d.h. dass ggf. eine nur geringe Gewindeüberdeckung vorhanden ist. Eine geringe Gewindeüberdeckung in Zusammenwirken mit einem großen vorherrschenden Spiel in der Gesamtkonstruktion kann dabei zu einer unerwünschten Blockade des Systems führen.

Aus der DE 10 2004 053 033 B3 ist eine Zug- und/oder Druckstange gemäß dem Oberbegriff des Anspruchs 1 bekannt. Sie zeigt ein mechanisches Bewegungsübertragungsorgan zur Übertragung einer rotatorischen Bewegung in eine translatorische Bewegung. Dabei wird ein feststehender Hohlzylinder mit einer in seiner Mantelfläche ausgebildeten Steuernut gezeigt. Im Hohlzylinder ist ein Übertragungskolben geführt, mit dem ein Steuerbolzen fest verbunden ist. Durch die Verdrehung der Stellhülse gleitet der Steuerbolzen innerhalb der Steuernut und bewirkt so eine axiale Stellbewegung sowohl auf den Übertragungskolben als auch auf ein Schubglied.

Darüber hinaus ist die DE 20 2012 201 723 A1 bekannt. Diese zeigt ein Planetenwälzgetriebe mit einer ein Außengewinde aufweisenden Spindelwelle, die über eine elektrisch antreibbare Spindelmutter, entlang einer Längsachse verstellbar ist. Zwischen der Spindelmutter und der Spindelwelle sind Planetenwälzkörper mit einem zu dem Außengewinde komplementären Rillenabschnitt angeordnet. Auch bei dieser Gewindeverbindung droht zwischen der Spindelwelle und den Planetenwälzkörper ein Verkanten.

Aufgabe der vorliegenden Erfindung ist es daher, eine Zug- und/oder Druckstange, eine elektrische Löseeinheit und einen elektrischen Parallelgreifer für die Spann- und Greiftechnik bereitzustellen, die effektiv und betriebssicher zwischen zwei Konfigurationen verstellbar ist.

Diese Aufgabe wird durch eine Zug- und/oder Druckstange gemäß Anspruch 1, durch eine elektrische Löseeinheit gemäß Anspruch 7 und durch einen elektrischen Parallelgreifer gemäß Anspruch 15 gelöst. Die Zug- und/oder Druckstange ist entlang einer Stangenlängsachse verstellbar, und umfasst eine Steuerkurve zur Führung eines Steuerglieds, welche einen zumindest teilweise spiralförmigen, mehrere Steigungsabschnitte aufweisenden Wendelabschnitt umfasst.
Somit ist also entlang der Stangenlängsachse der Zug- und/oder Druckstange anstelle eines Gewindes eine Steuerkurve ausgebildet, die regelmäßig eine Führungsnut umfasst. Die Breite der Führungsnut bzw. des Wendelabschnitts der Steuerkurve ist gegenüber den Gewindegängen eines Trapezgewindes sehr viel breiter ausgestaltet, wodurch beim Einsatz einer Steuerkurve ein Verkanten von in die Steuerkurve eingreifenden Elementen nahezu ausgeschlossen ist. Ferner weist eine Steuerkurve die Besonderheit auf, dass diese nicht wie ein Gewinde mit Gewindegängen mit einer konstanten Steigung geformt ist, sondern unterschiedliche Steigungen aufweisende Steigungsabschnitte umfasst. Erfindungsgemäß umfasst die Steuerkurve mindestens einen sich an den Wendelabschnitt anschließenden, im Wesentlichen radial zur Stangenlängsachse erstreckenden Leerhubabschnitt. Innerhalb des Leerhubabschnittes gleitet ein Steuerglied derart in der Steuerkurve der Zug- und/oder Druckstange, dass diese keine axiale Verstellung erfährt. Damit ist der Vorteil verbunden, dass die Zug- und/oder Druckstange in ihrer axialen Lage fixiert ist, wenn sich ein Steuerglied innerhalb des Leerhubabschnittes befindet.

Um die Zug- und/oder Druckstange besonders einfach herstellen zu können, hat es sich als bevorzugt erwiesen, wenn die Steuerkurve an einem Außenumfang der Zug- und/oder Druckstange ausgebildet ist. Vorzugsweise ist die Zug- und/oder Druckstange zusätzlich beschichtet mit einer reibungsverringernden Beschichtung. Um ein abriebarmes Gesamtsystem zu schaffen, kommt eine DLC 4000-Beschichtung (DLC = Diamond-Like-Carbon;Hartstoffschicht auf Kohlenstoffbasis) für die Zug- und/oder Druckstange in Betracht. Ferner kann die Zug- und/oder Druckstange gehärtet sein, wobei die Gleitflächen der Steuerkurve überschliffen sind.

Eine alternative Ausführungsform sieht vor, dass die Zug- und/oder Druckstange zumindest teilweise als eine Hohlstange gebildet ist und dass die Steuerkurve in einem Innenumfang der Hohlstange ausgebildet ist. Damit ist der Vorteil verbunden, dass die Außenseite der Zug- und/oder Druckstange als Gleitoberfläche innerhalb eines Gehäuses zur Verfügung steht, wobei zur Verdrehsicherung der Zug- und/oder Druckstange die Außenkontur auch mit einer unrunden Form gestaltet ist. Die Außenfläche kann dabei ebenfalls mit Werkstoffen mit besonderen Gleiteigenschaften veredelt bzw. beschichtet sein.

Um die Zug- und/oder Druckstange auf einfache Weise drehend antreiben zu können, ist eine Innenaufnahme unrunden Querschnitts vorgesehen.

Weiterhin ist es zur Entkopplung von Drehbewegungen sinnvoll, wenn an der Zug- und/oder Druckstange auf der dem Fortsatz oder der Innenaufnahme abgewandten Seite eine drehbare Kappe und/oder ein Axiallager angeordnet ist.

Eine mögliche Anwendung findet die Zug- und/oder Druckstange bei einer elektrischen Löseeinheit.

Die elektrische Löseeinheit sieht eine erfindungsgemäße Zug- und/oder Druckstange vor, sowie einen Elektromotor, der zumindest mittelbar drehfest mit der Zug- und/oder Druckstange gekoppelt ist. Ferner weist die elektrische Löseeinheit ein in einem Gehäuse zumindest axial festgelegtes Steuerglied auf, das in die Steuerkurve der Zug- und/oder Druckstange eingreift zur axialen Verstellung der Zug- und/oder Druckstange zwischen einer Spannstellung und einer Lösestellung. Auch diese elektrische Löseeinheit weist den Vorteil auf, dass die ein Werkzeugspannsystem betätigendende Lösestange, die hierbei zwischen einer Spannstellung und einer Lösestellung umgeschaltet wird, nicht mit einer Gewindeverbindung, sondern mit einer axial ausgebildeten Steuerkurve sowie mit einem in die Steuerkurve eingreifenden Steuerglied gebildet ist.

Um ein sicheres Verstellen zwischen den beiden Stellungen zu gewährleisten, hat es sich als besonders sinnvoll erwiesen, wenn das Steuerglied als ein Steuerbolzen oder als eine Steuerkurve gebildet ist. Die dabei vorherrscheinde Rotationssymmetrie des Steuerglieds ermöglicht ein einfaches Gleiten des Steuerglieds innerhalb der Steuerkurve bzw. innerhalb der Führungsnut.

Um ein hohes Drehmoment auf die Zug- und/oder Druckstange ausüben zu können, hat es sich als vorteilhaft gezeigt, wenn dem Abtrieb des Elektromotors ein Exzentergetriebe zugeordnet ist, das zumindest mittelbar drehfest mit der Zug- und/oder Druckstange gekoppelt ist. Als besonders vorteilhaft hat sich in diesem Zusammenhang ein rücktriebfreies Wellgetriebe erwiesen, das eine relativ große Untersetzung bereitstellen kann, um ein hohes Drehmoment zu erzielen. Als bevorzugt hat sich eine Untersetzung zwischen 1:60 und 1:40 erwiesen, vorzugsweise wird eine Untersetzung von 1:50 gewählt.

Weiterhin hat es sich als sinnvoll erwiesen, wenn mit einer Antriebsspindel des Elektromotors ein Mitnehmerflansch verbunden ist, der einen sich axial erstreckenden Mitnehmerbund aufweist. Dieser Mitnehmerbund kann mit anderen drehend anzutreibenden Bauteilen gekoppelt werden.

Für eine einfache Übertragung der Drehbewegung hat es sich als vorteilhaft gezeigt, wenn dem Mitnehmerbund zum rotatorischen Antreiben der Zug- und/oder Druckstange ein Antriebsflansch unrunden Querschnitts zugeordnet ist.

Um die axiale Stellung der Zug- und/oder Druckstange überwachen zu können, hat es sich als bevorzugt erwiesen, wenn der Mitnehmerbund drehfest mit einer Sensorhülse gekoppelt ist, die ein bezüglich der Stangenlängsachse exzentrisch angeordnetes oder mit einer Umfangssteigung gebildetes Sensortarget aufweist. Von Vorteil ist es dabei, wenn dem Sensortarget ein Abstandssensor zugeordnet ist, wobei der Abstand des Abstandssensors zum Sensortarget proportional zur axialen Lage der Zug- und/oder Druckstange innerhalb des Gehäuses gebildet ist.

Um die Zug- und/oder Druckstange auf einfache Weise axial verstellen zu können und um möglichst wenig Kraft bei der Verstellung zu verlieren bzw. aufwenden zu müssen, hat es sich als vorteilhaft erwiesen, wenn im Gehäuse koaxial zur Stangenlängsachse ein Gleitlager und/oder eine Gleitbuchse angeordnet ist.

Eine weitere vorteilhafte Anwendung der erfindungsgemäßen Zug- und/oder Druckstange ist ihr Einsatz in einer elektrischen Vereinzelungsvorrichtung. Diese zeichnet sich dadurch aus, dass sie mit einer in einem Gehäuse drehfest, aber axial verschiebbar geführten und mit einem Vereinzelungsfinger verbundenen Zug- und/oder Druckstange gebildet ist. Ferner ist ein Elektromotor vorgesehen, der zumindest mittelbar drehfest mit einem Stellelement gekoppelt ist, sowie ein an dem Stellelement angeordneten Steuerglied, das in die Steuerkurve eingreift zur axialen Verstellung der Zug- und/oder Druckstange zwischen einer Vereinzelungsstellung und einer Durchlassstellung. Auch bei einer Vereinzelungsvorrichtung treten keine Verkantungen von Gewindeverbindungen mehr auf, die zu einer Blockade oder zu einer Beschädigung der Vereinzelungsvorrichtung führen könnte.

Die Vereinzelungsstellung ist dabei diejenige Konfiguration der Vereinzelungsvorrichtung, in der ein einzelnes Element (z.B. ein magaziniertes Werkstück) von weiteren Elementen (weiteren magazinierten Werkstücken) getrennt wird. Die Durchlassstellung ist diejenige Konfiguration der Vereinzelungsvorrichtung, in der die Elemente voneinander ungetrennt (unvereinzelt) die Vereinzelungsvorrichtung passieren können. Diese wird häufig auch als Leerlaufstellung bezeichnet, da die Werkstücke dabei aus dem Magazin ungehindert austreten können.

Um Beschädigungen an der Vereinzelungsvorrichtung vermeiden zu können, hat es sich als bevorzugt erwiesen, wenn in der Zug- und/oder Druckstange ein federndes Element bzw. eine Feder oder ein Federpaket angeordnet ist zur Dämpfung axial auf den Vereinzelungsfinger einwirkender Kräfte.

Eine weitere bevorzugte Anwendung der erfindungsgemäßen Zug- und/oder Druckstange betrifft ihr Einsatz bei einer elektrischen Greifvorrichtung. Diese zeichnet sich dadurch aus, dass sie Greifergrundbacken aufweist, die in radial zur Greiferlängsachse ausgebildeten Greifernuten geführt und verstellbar sind. Die Greifergrundbacken sind über geneigt zur Greiferlängsachse verlaufende Keilnuten mit einem axial verstellbaren Keilhaken oder Keilkegel in Wechselwirkung, der mit einer Zug- und/oder Druckstange gemäß der vorliegenden Erfindung verbunden ist. Des Weiteren ist ein Elektromotor zumindest mittelbar drehfest mit einem Stellelement gekoppelt, an dem ein Steuerglied angeordnet ist, welches in die Steuerkurve eingreift zur axialen Verstellung der Zug- und/oder Druckstange zwischen einer Offenstellung, einer Spannstellung und einer Geschlossenstellung. Die Spannstellung befindet sich zwischen der Offenstellung und der Geschlossenstellung und ihre Lage dabei abhängig von der betreffenden Applikation der Greifvorrichtung.

Um wiederum Beschädigungen an den Greifergrundbacken bzw. an der elektrischen Greifvorrichtung vorzubeugen, hat es sich als vorteilhaft erwiesen, wenn auch hier in der Zug- und/oder Druckstange ein federndes Element bzw. eine Feder oder ein Federpaket angeordnet ist zur Dämpfung radial auf die Greifergrundbacken einwirkender Kräfte.

Als bevorzugt hat sich gezeigt, wenn Aufsatzbacken zur lösbaren Befestigung an den Greifergrundbacken vorgesehen sind, die mit radial innenliegenden Greiferflächen für ein Außengreifen von Werkstücken und/oder mit radial außenliegenden Greiferflächen für ein Innengreifen von Werkstücken ausgebildet sind. Die Aufsatzbacken können dabei eine an das zu ergreifende Werkstück angepasste Form besitzen, so dass dieses fest und sicher außen bzw. innen gegriffen werden kann.

Eine weitere Anwendung der erfindungsgemäßen Zug- und/oder Druckstange betrifft ihren Einsatz bei einem elektrischen Parallelgreifer.

Hierbei ist vorgesehen den elektrischen Parallelgreifer mit mindestens zwei Greiferarmen auszustatten, wovon mindestens einer mit einer Zug- und/oder Druckstange gemäß der vorliegenden Erfindung betätigbar ist. Es ist ferner ein zumindest mittelbar mit einem Stellelement drehfest gekoppelter Elektromotor vorgesehen. Am, ggfs. mehrteilig gebildeten Stellelement ist eine, ggfs. zur Anzahl der Zug- und/oder Druckstangen korrespondierende Anzahl an Steuergliedern angeordnet, die in die Steuerkurven eingreifen zur axialen Verstellung zwischen einer Geschlossenstellung und einer Offenstellung.

Im Folgenden soll die Erfindung anhand von mehreren Ausführungsbeispielen näher erläutert werden; es zeigen:
- Fig. 1a bis 1e: eine erste Ausführungsform der erfindungsgemäßen Zug- und/oder Druckstange,
- Fig. 2a, 2b: ein axiales Stellsystem (Axialstellsystem) mit einer Zug- und/oder Druckstange gemäß Fig. 1a bis 1e,
- Fig. 3a bis 3e: eine zweite Ausführungsform der erfindungsgemäßen Zug- und/oder Druckstange,
- Fig. 4a, 4b: ein axiales Stellsystem (Axialstellsystem) mit einer Zug- und/oder Druckstange gemäß Fig. 3a bis 3e mit einem als ein Steuerbolzen gebildeten Steuerglied,
- Fig. 5a, 5b: das System aus Fig. 4a und 4b mit einem als eine Steuerkugel gebildeten Steuerglied,
- Fig. 6a bis 6e: eine dritte Ausführungsform der erfindungsgemäßen Zug- und/oder Druckstange;
- Fig. 7a bis 7e: eine vierte Ausführungsform der erfindungsgemäßen Zug- und/oder Druckstange,
- Fig. 8a bis 8e: eine von der Erfindung nicht umfasste Zug- und/oder Druckstange mit einer als Wendelnut gebildeten Steuerkurve,
- Fig. 9a, 9b: ein axiales Stellsystem (Axialstellsystem) mit einer Zug- und/oder Druckstange gemäß Fig. 7a bis 7e,
- Fig. 10: einen Längsschnitt durch eine elektrische Löseeinheit,
- Fig. 11: die Löseeinheit aus Fig. 10 in Spannstellung in einer perspektivischen Ansicht teils geschnitten gezeigt,
- Fig. 12: die elektrische Löseeinheit aus Fig. 10 und 11 in Lösestellung,
- Fig. 13: eine Vereinzelungsvorrichtung in Durchlassstellung in einer perspektivischen Ansicht teils geschnitten gezeigt,
- Fig. 14: einen Längsschnitt der Vereinzelungsvorrichtung aus Fig. 13,
- Fig. 15: die Vereinzelungsvorrichtung aus Fig. 13 in Vereinzelungsstellung,
- Fig. 16: einen Längsschnitt durch die Vereinzelungsvorrichtung aus Fig. 15,
- Fig. 17: eine Greifvorrichtung zum Innengreifen in Offenstellung in einer perspektivischen Ansicht teils geschnitten gezeigt,
- Fig. 18: einen Längsschnitt durch die Greifvorrichtung aus Fig. 17,
- Fig. 19: die Greifvorrichtung aus Fig. 17 in Geschlossenstellung (die Spannstellung liegt zwischen Offen- und Geschlossenstellung) in einer perspektivischen Ansicht teils geschnitten gezeigt,
- Fig. 20: einen Längsschnitt durch die Greifvorrichtung aus Fig. 19,
- Fig. 21: einen Längsschnitt durch einen Parallelgreifer in Geschlossenstellung,
- Fig. 22: den Parallelgreifer aus Fig. 21 in einer perspektivischen Ansicht teils geschnitten gezeigt,
- Fig. 23: einen Längsschnitt durch den Parallelgreifer aus Fig. 21 in Offenstellung,
- Fig. 24: den Parallelgreifer aus Fig. 23 in einer perspektivischen Ansicht teils geschnitten gezeigt,

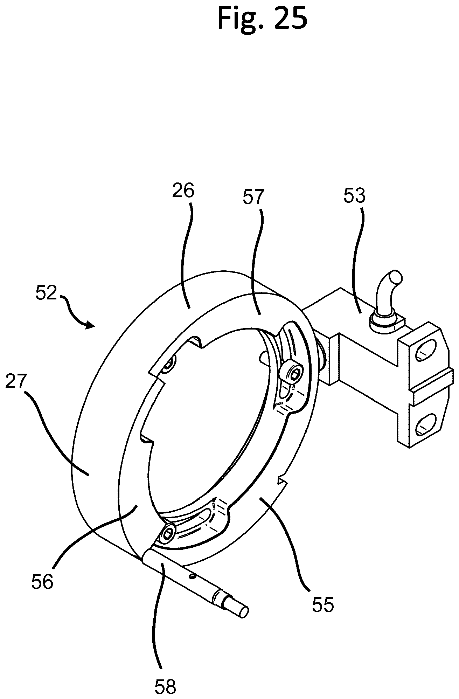

- Fig. 25: eine perspektivische Ansicht eines Sensorsystems zur Kontrolle der axialen Lage einer Zug- und/oder Druckstange,
- Fig. 26: eine Draufsicht auf das Sensorsystem aus Fig. 25, sowie
- Fig. 27: eine Frontansicht auf das Sensorsystem gemäß Fig. 25.

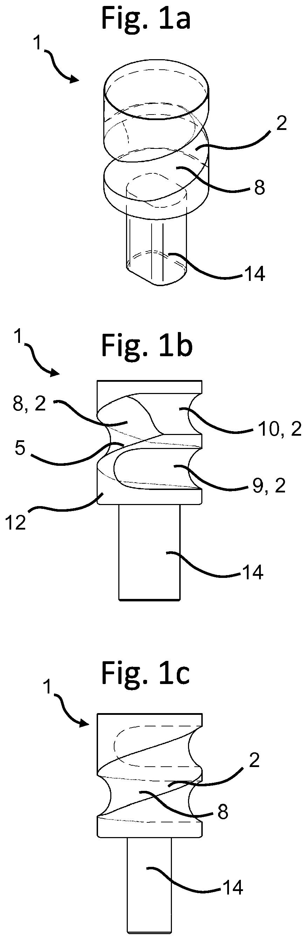

In Fig. 1a bis 1e ist eine Zug- und/oder Druckstange 1 gezeigt, die entlang einer Stangenlängsachse verstellbar ist. Diese weist eine Steuerkurve 2 zur Führung eines Steuerglieds 3 auf, die einen zumindest teilweise spiralförmigen, mehrere Steigungsabschnitte 4, 5, 6, 7 aufweisenden Wendelabschnitt 8 umfasst.
Die Steuerkurve 2 umfasst ferner mindestens eine sich an den Wendelabschnitt 8 anschließenden, im Wesentlichen radial zur Stangenlängsachse erstreckenden und vorzugsweise kreisbogenförmigen Leerhubabschnitt 9, 10. Im Ausführungsbeispiel sind genau zwei der Leerhubabschnitte 9, 10 vorgesehen, wovon ein erster Leerhubabschnitt 9 an einem ersten Ende des Wendelabschnitts 8 angeordnet ist und wovon ein zweiter Leerhubabschnitt 10 an dem dem ersten Ende gegenüberliegenden zweiten Ende des Wendelabschnitts 8 angeordnet ist. Vorzugsweise erstrecken sich die Leerhubabschnitte 9, 10 der Zug- und/oder Druckstange 1 um bis zu 90 Grad radial zur Stangenlängsachse. Mit anderen Worten verläuft der Leerhubabschnitt 9, 10 also derart, dass dieser im Wesentlichen stets auf einer Normalen zu der Stangenlängsachse liegt.

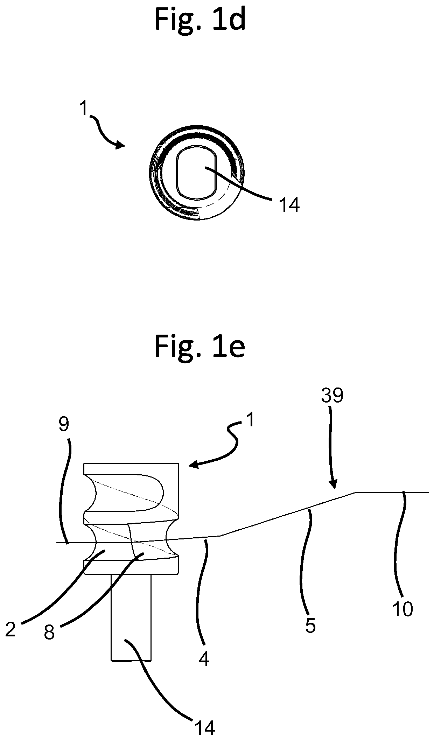

Den Fig. 1a bis 1e ist des Weiteren zu entnehmen, dass die Steuerkurve 2 an einem Außenumfang 12 der Zug- und/oder Druckstange 1 ausgebildet ist. Ferner besitzt die Zug- und/oder Druckstange 1 einen Fortsatz 14 unrunden Querschnitts (Fig. 1d). Dieser Fortsatz 14 erstreckt sich axial und ist im Querschnitt rechteckig mit abgerundeten Ecken gebildet. Durch die unrunde Form des Fortsatzes 14 lässt sich eine Drehbewegung auf die Zug- und/oder Druckstange 1 übertragen.

In Fig. 1e ist die Wendelcharakteristik 39 der Zug- und/oder Druckstange 1 dargestellt. Sie sieht einen ersten Steigungsabschnitt 4 geringer Steigung und einen zweiten Steigungsabschnitt 5 mit gegenüber der geringen Steigung höheren Steigung vor. Der erste Steigungsabschnitt 4 des Wendelabschnitts 8 ist gegenüber der Normalen zur Stangenlängsachse zwischen 2 Grad und 6 Grad geneigt, vorzugsweise ist er um genau 4 Grad gegenüber der Normalen der Stangenlängsachse geneigt angeordnet. Der zweite Steigungsabschnitt 5 des Wendelschnitts 8 ist gegenüber der Normalen zur Stangenlängsachse zwischen 14 Grad und 22 Grad geneigt, vorzugsweise ist er um genau 18 Grad gegenüber der Normalen der Stangenlängsachse geneigt angeordnet.

Der erste Steigungsabschnitt 4 mit geringer Steigung führt also zu einem geringen Axialhub der Zug- und/oder Druckstange 1, wobei hierbei eine hohe Kraft erzielbar ist (Lösehub). Der zweite Steigungsabschnitt 5 mit hoher Steigung bewirkt einen Axialhub der Zug- und/oder Druckstange 1 in kürzerer Zeit, dafür mit einer geringeren Kraft (Eilhub).

Die Wendelcharakteristik 39 zeigt weiterhin, dass sich an den ersten Steigungsabschnitt 4 des Wendelabschnitts 8 ein erster Leerhubabschnitt 9 anschließt. Ferner ist gezeigt, dass sich an den zweiten Steigungsabschnitt 5 des Wendelabschnitts 8 ein zweiter Leerhubabschnitt 10 anschließt. Befindet sich ein Steuerglied 3 innerhalb des jeweiligen Leerhubabschnitts 9, 10, so ist die axiale Bewegung der Zug- und/oder Druckstange 1 blockiert und die Zug- und/oder Druckstange 1 ist axial in ihrer Lage fixiert.

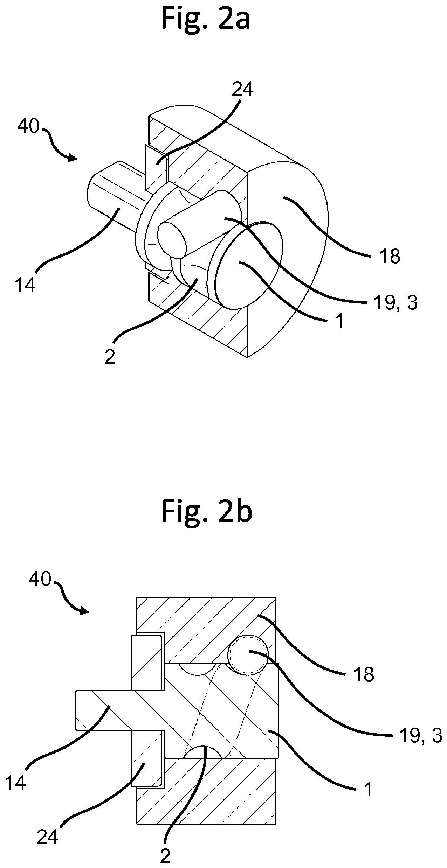

Fig. 2a und 2b zeigen ein Axialstellsystem 40 mit einer Zug- und/oder Druckstange 1 gemäß Fig. 1a bis 1e. Hierbei greift ein als Steuerbolzen 19 gebildetes Steuerglied 3 in die Steuerkurve 2 der Zug- und/oder Druckstange 1 ein. Der Querschnitt der Zug- und/oder Druckstange 1 ist hierbei rotationssymmetrisch gebildet. Der Steuerbolzen 19 ist im Gehäuse 18 axial festgelegt. Des Weiteren ist ein rotatorisch durch einen Elektromotor 17 antreibbarer Antriebsflansch 24 dargestellt, der drehfest mit dem Fortsatz 14 der Zug- und/oder Druckstange 1 verbunden ist. Dieser Antriebsflansch 24 lässt dabei eine axiale Relativbewegung der Zug- und/oder Druckstange 1 zu. Die Verbindung zwischen dem Antriebsflansch 24 und der Zug- und/oder Druckstange 1 ist also drehfest, aber axial verschiebbar ausgestaltet. Wird die Zug- und/oder Druckstange 1 durch den Antriebsflansch 24 verdreht, so gleitet der Steuerbolzen 19 entlang der Steuerkurve 2, wodurch die Zug- und/oder Druckstange 1 axial nach vorn, d.h. aus dem Gehäuse 18 heraus bzw. axial nach hinten, d.h. in das Gehäuse 18 hinein verstellt wird.

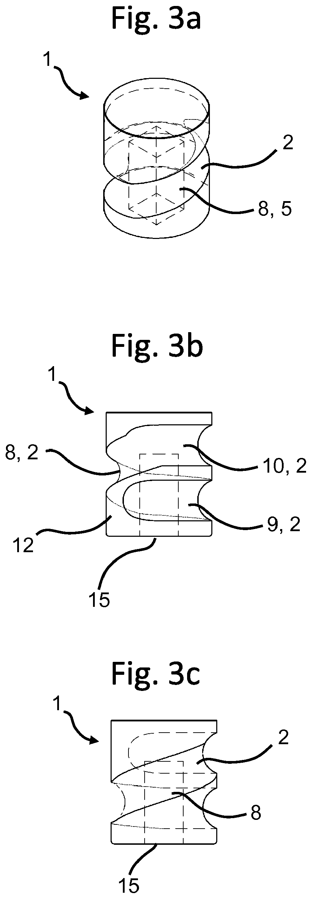

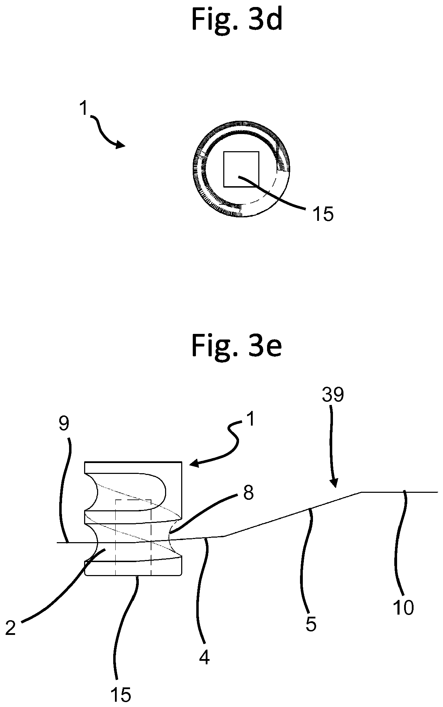

In Fig. 3a bis 3e ist eine zweite Zug- und/oder Druckstange 1 gezeigt, die in ihrem grundsätzlichen Aufbau derjenigen aus Fig. 1a bis 1e entspricht. Im Unterschied zur Zug- und/oder Druckstange 1 gemäß Fig. 1a bis 1e sieht diese jedoch keinen Fortsatz 14 unrunden Querschnitts vor, sondern besitzt eine Innenaufnahme 15 unrunden Querschnitts. Dadurch ist die Baulänge der Zug- und/oder Druckstange 1 dieser Ausführungsform sehr kurz gestaltet, insbesondere gegenüber derjenigen der Ausführungsform gemäß Fig. 1a bis 1e. Die Außenkontur, insbesondere die Steuerkurve 2 stimmt sowohl im Wendelabschnitt 8 als auch im Hinblick auf die Leerhubabschnitte 9, 10 mit derjenigen der Fig. 1a bis 1e überein. Ebenso besitzt die Zug- und/oder Druckstange 1 die gleiche Wendelcharakteristik 39 wie diejenige der Fig. 1a bis 1e.

Aus Fig. 3a bis 3c geht hervor, dass die Zug- und/oder Druckstange 1 auf der der Innenaufnahme 15 abgewandten Stirnseite geschlossen ausgeführt ist. Damit ist der Vorteil verbunden, dass keine Verschmutzung in diejenigen Antriebsverbindungen eintreten kann, die eine rotatorische und/oder axiale Bewegung der Zug- und/oder Druckstange 1 bewirken. Aus Fig. 3d geht ferner hervor, dass die Innenaufnahme 15 im Querschnitt als ein Mehrkant, vorliegend als ein Vierkant gebildet ist.

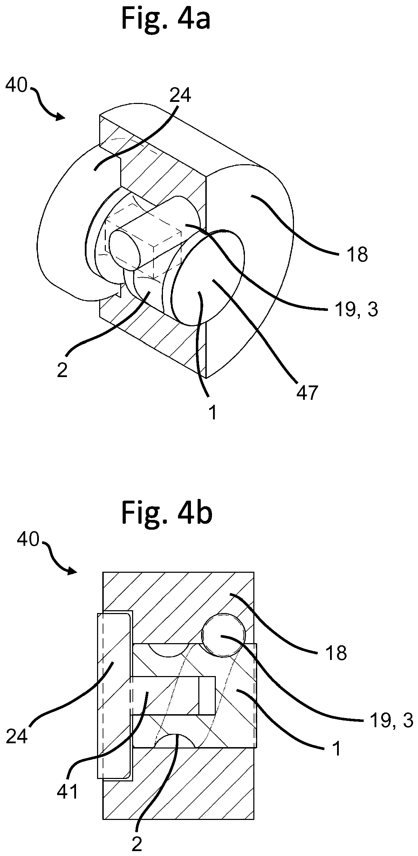

Fig. 4a und 4b zeigen ein Axialstellsystem 40 mit einer Zug- und/oder Druckstange 1, die eine Steuerkurve 2 umfasst und in die ein als Steuerbolzen 19 (Führungsbolzen) gebildetes Steuerglied 3 (Führungsglied) eingreift. Der Steuerbolzen 19 ist axial in einem Gehäuse 18 festgelegt.

Dieser Steuerbolzen 19 kann auch um seine Bolzenlängsachse rotierbar im Gehäuse 18 gelagert sein, wodurch die Verstellung der Zug- und/oder Druckstange 1 reibungsverringernd erfolgt. Des Weiteren ist ein mittels eines Elektromotors 17 rotierend antreibbarer Antriebsflansch 24 vorgesehen, der einen Stellfortsatz 41 aufweist, der in seinem Querschnitt dem Querschnitt der Innenaufnahme 15 der Zug- und/oder Druckstange 1 entspricht. Der Vorteil dieser Ausführungsform eines Axialstellsystems 40 ist die kurze Baulänge, insbesondere gegenüber derjenigen des Axialstellsystems 40 gemäß Fig. 2a und 2b. Der Stellfortsatz 41 des Antriebsflansches 24 ist derart ausgestaltet, dass dieser eine drehfeste, aber axial verschiebbare Verbindung mit der Zug- und/oder Druckstange 1 ausbildet. Wird die Zug- und/oder Druckstange 1 durch den Antriebsflansch 24 bzw. durch den Stellfortsatz 41 verdreht, so gleitet der Steuerbolzen 19 entlang der Steuerkurve 2, wodurch die Zug- und/oder Druckstange 1 axial nach vorn, d.h. aus dem Gehäuse 18 heraus bzw. nach hinten, d.h. in das Gehäuse 18 hinein verstellt wird.

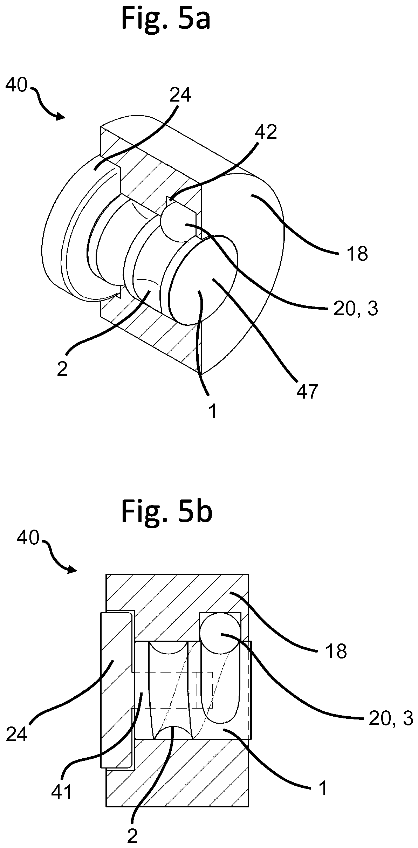

In Fig. 5a und 5b ist ein der Fig. 4a und 4b entsprechendes System gezeigt, wobei hier anstelle eines Steuerbolzens 19 ein als Steuerkugel 20 (Führungskugel) gebildetes Steuerglied 3 in der Steuerkurve 2 der Zug- und/oder Druckstange 1 positioniert ist. Diese Steuerkugel 20 ist in einer Aufnahmetasche 42 im Gehäuse 18 axial festgelegt und kann entlang der Steuerkurve 2 gleiten. Ebenso ist es möglich, dass die Steuerkugel 20 in der Aufnahmetasche 42 um ihre eigene Achse rotiert, so dass die Reibung des Gesamtsystems reduziert ist.

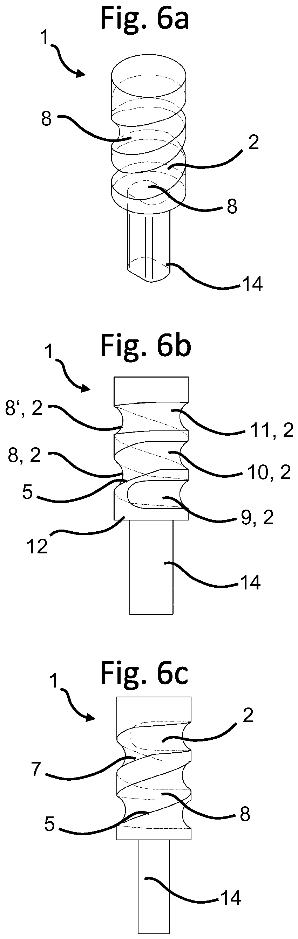

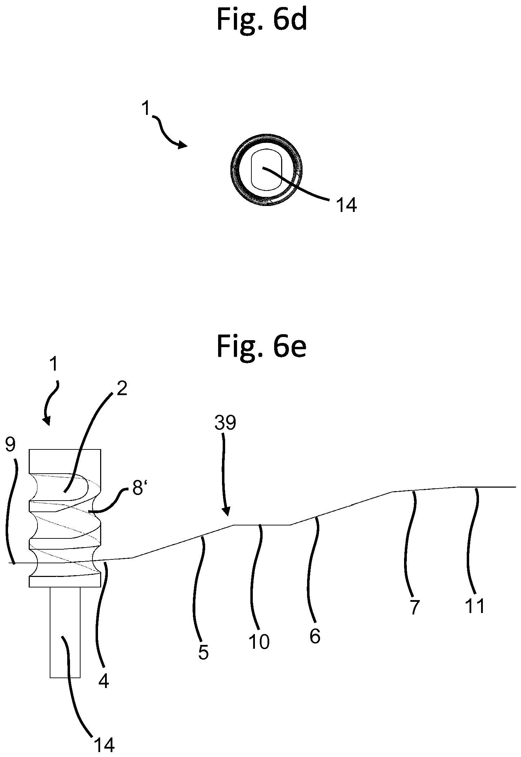

In Fig. 6a bis 6e ist eine dritte Zug- und/oder Druckstange 1 gezeigt, die in ihrem grundsätzlichen Aufbau dem Aufbau der Zug- und/oder Druckstange 1 gemäß Fig. 1a bis 1e entspricht. Hierbei ist jedoch die Wendelcharakteristik 39 dahingehend verändert worden, dass mehrere, vorliegend genau zwei Wendelabschnitte 8 vorgesehen sind, die durch einen Leerhubabschnitt 10 voneinander getrennt sind. Die am Außenumfang 12 der Zug- und/oder Druckstange 1 ausgebildete Steuerkurve 2 weist dementsprechend einen ersten Leerhubabschnitt 9 auf, an den sich ein erster Steigungsabschnitt 4 anschließt. An den als Lösehub gebildeten ersten Steigungsabschnitt 4 schließt sich ein als Eilhub gebildeter zweiter Steigungsabschnitt 5 an. An den aus dem ersten Steigungsabschnitt 4 und dem zweiten Steigungsabschnitt 5 gebildeten Wendelabschnitt 8 schließt sich ein zweiter Leerhubabschnitt 10 an. An diesen zweiten Leerhubabschnitt 10 schließt sich wiederum ein ebenfalls als Eilhub gebildeter dritter Steigungsabschnitt 6 eines weiteren Wendelabschnitts 8' an, dem ein als ein Lösehub (auch Krafthub) gebildeter vierter Steigungsabschnitt 7 nachgeordnet ist. An den vierten Steigungsabschnitt 7 schließt sich sodann ein dritter Leerhubabschnitt 11 an.

Die in Fig. 6a bis 6e gezeigte Zug- und/oder Druckstange 1 (bzw. Zug- und/oder Druckbolzen) ist ebenfalls mit einem Fortsatz 14 unrunden Querschnitts geformt, der der Übertragung von Drehbewegungen dient. Wie auch die Zug- und/oder Druckstange 1 nach Fig. 1 bis 5 so ist auch die Zug- und/oder Druckstange 1 nach Fig. 6a bis 6e derart gebildet, dass diese axial verstellt wird, sofern ein Steuerglied 3 in die Steuerkurve 2 eingreift und sofern eine Relativdrehung bezüglich des Steuerglieds erfolgt. Sie bewegt sich axial in Richtung des Fortsatzes 14, wenn sie entgegen des Uhrzeigersinns gedreht wird. Sie bewegt sich axial entgegen der Richtung des Fortsatzes 14, wenn sie im Uhrzeigersinn gedreht wird. Selbstverständlich ist es auch möglich, den Rotationssinn der Steuerkurve 2 umzukehren, so dass dann bei einem Drehen der Zug- und/oder Druckstange 1 entgegen des Uhrzeigersinns eine axiale Verstellung entgegen der Richtung des Fortsatzes 14 erfolgt.

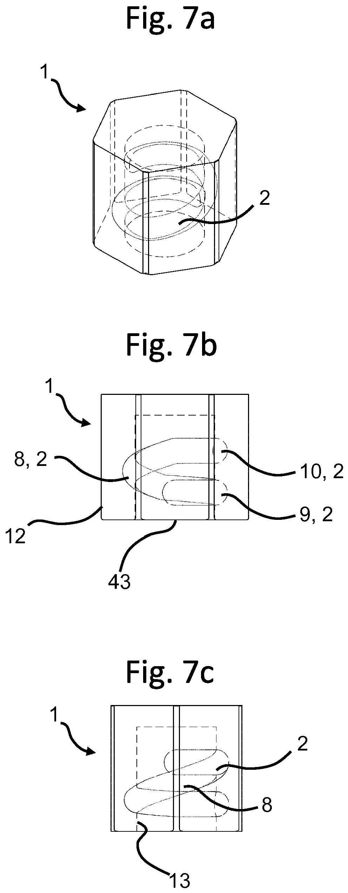

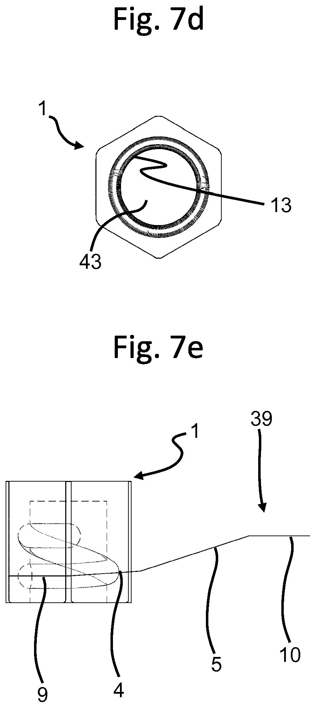

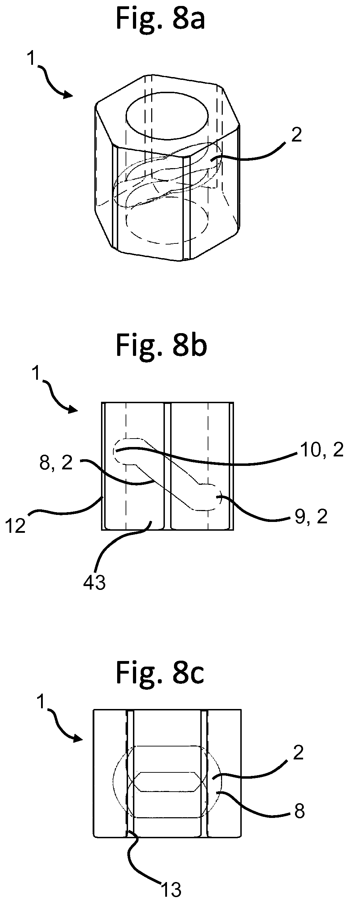

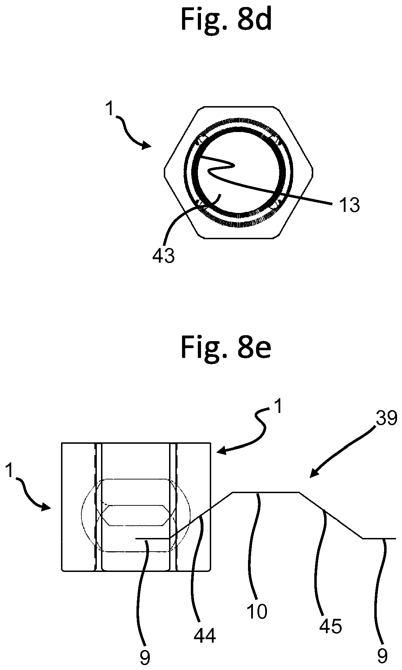

In Fig. 7a bis 7e und in Fig. 8a bis 8e sind weitere Auführungsformen einer Zug- und/oder Druckstange 1 gezeigt, die entlang einer Stangenlängsachse verstellbar ist und die eine Steuerkurve 2 zur Führung eines Steuergliedes 3 aufweist. Die hier gezeigte Zug- und/oder Druckstange 1 weist eine Innenausnehmung 43 auf. Sie ist des Weiteren teilweise als eine Hohlstange gebildet, wobei am Innenumfang 13 der Hohlstange, d.h. in der Wandung der Innenausnehmung 43 die Steuerkurve 2 ausgebildet ist. Die hier gezeigte Steuerkurve 2 besitzt einen mehrere Steigungsabschnitte 4, 5 aufweisenden Wendelabschnitt 8, wobei gemäß der Ausführungsform nach Fig. 7 und 8 des Weiteren ein sich an den Wendelabschnitt 8 anschließender erster Leerhubabschnitt 9 und ein sich an den Wendelabschnitt 8 anschließender zweiten Leerhubabschnitt 10 vorgesehen sind. Ferner ist die Außenkontur der Zug- und/oder Druckstange 1 unrund geformt, so dass diese drehfest, aber axial verschiebbar in einem Gehäuse 18 festgelegt werden kann. Die Innenausnehmung 43 hingegen ist zylindrisch geformt, so dass in diese ein Stellelement 31 mit rundem Querschnitt eingreifen kann. Aus der Wendelcharakteristik 39 gemäß Fig. 7e geht hervor, dass der Wendelabschnitt 8 einen ersten Steigungsabschnitt 4 mit geringer Steigung (Krafthub bzw. Lösehub) und einen zweiten Steigungsabschnitt 5 mit hoher Steigung (Eilhub) umfasst.
In Fig. 8a bis 8e ist eine Zug- und/oder Druckstange 1 gezeigt, deren Steuerkurve 2 in Form einer geschlossenen Wendelnut gebildet ist. Aus der Wendelcharakteristik 39 gemäß Fig. 8e geht hervor, dass die Steuerkurve 2 einen ersten Leerhubabschnitt 9 umfasst, an die sich ein erster Wendelabschnitt 44 anschließt. Dem ersten Wendelabschnitt 44 folgt ein zweiter Leerhubabschnitt 10. An diesem zweiten Leerhubschnitt 10 grenzt wiederum ein zweiter Wendelabschnitt 45 an, der aufgrund der in umfangsrichtung der Innenausnehmung 43 ausgeprägten Wendelnut (Steuernut) wieder in den ersten Leerhubabschnitt 9 übergeht. Ferner ist die Innenausnehmung 43 durchgehend gestaltet, so dass die Zug- und/oder Druckstange 1 als eine Druckhülse geformt ist.

Die Wendelcharakteristik 39 der Zug- und/oder Druckstange 1 gemäß Fig. 8a bis 8e hat zur Folge, dass die Zug- und/oder Druckstange 1 fortwährend zwischen der Lösestellung und der Spannstellung umgeschaltet wird, wenn ein nur in einer Drehrichtung rotierend angetriebenes Steuerglied 3 in der Wendelnut gleitet. Damit ist der Vorteil verbunden, dass ein Umkehren der Umdrehungsrichtung eines Motors nicht erforderlich ist, um die Zug- und/oder Druckstange 1 zwischen der Lösestellung und der Spannstellung umzuschalten. Schaltzeiten des Systems werden dadurch verkürzt und Programmieraufwand verringert.

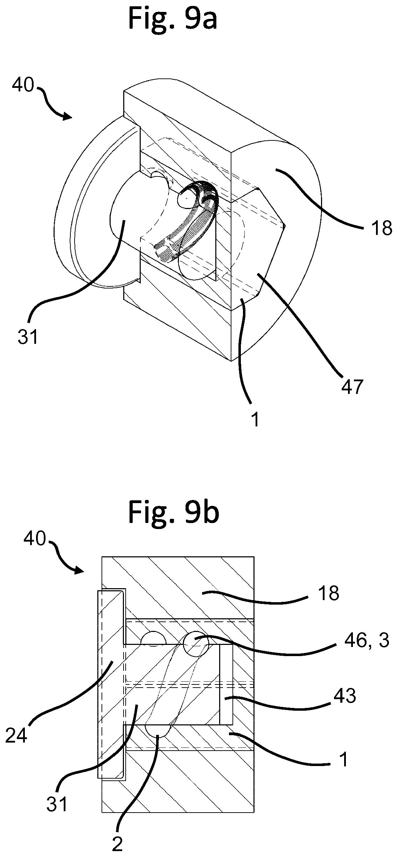

In Fig. 9a und 9b ist ein Axialstellsystem 40 gezeigt, das eine Zug- und/oder Druckstange 1 umfasst, wie sie in Fig. 7a bis 7e gezeigt ist. Das Gehäuse 18 besitzt hierbei eine an die Außenkontur der Zug- und/oder Druckstange 1 angepasste Innenkontur, wodurch die Zug- und/oder Druckstange 1 drehfest innerhalb des Gehäuses 18 geführt ist. Um das axiale Gleiten der Zug- und/oder Druckstange 1 zu erleichtern kann entweder deren Außenkontur und/oder die Innenkontur des Gehäuses 18 mit einer reibungsverringernden Beschichtung versehen sein. Funktionserhaltend ist jedoch alternativ vorgesehen, zwischen dem Gehäuse 18 und der Zug- und/oder Druckstange 1 ein Spiel zu belassen, derart, dass grundsätzlich eine Drehbewegung der Zug- und/oder Druckstange 1 verhindert ist, aber ausreichend Platz verbleibt, um eine axiale Bewegung der Zug- und/oder Druckstange 1 innerhalb des Gehäuses 18 zu ermöglichen. Der Antriebsflansch 24 des Systems weist ein Stellelement 31 auf, das in die rotationssymmetrische, insbesondere zylinderförmige Innenausnehmung 43 der Zug- und/oder Druckstange 1 eingreift. Am Stellelement 31 ist das Steuerglied 3 in Form einer Steuerkalotte 46 bzw. in Form einer Steuerkugel 20 angeordnet. Das Steuerglied 3 ist vorzugsweise fest mit dem Stellelement 31 verbunden. Wird nun der Antriebsflansch 24 rotierend angetrieben, so verdreht sich das Stellelement 31 mit dem Steuerglied 3 innerhalb der Innenausnehmung 43 der Zug- und/oder Druckstange 1. Dabei gleitet das Steuerglied 3 entlang der Wendelnut und zwingt die als Hohlstange gebildete Zug- und/oder Druckstange 1 in eine axiale Bewegung, die aus ihrer drehfesten Lagerung innerhalb des Gehäuses 18 resultiert. Auch in dieser Ausführungsform ist die Hohlstange topfförmig, d.h. einseitig geschlossen geformt, so dass auf der dem Antriebsflansch 24 abgewandten Seite eine Druck- bzw. Zugfläche 47 bereit steht.

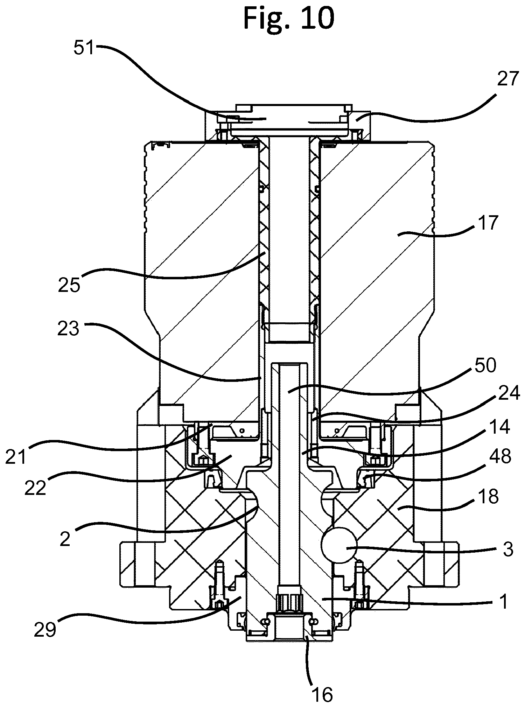

In Fig. 10 bis 12 ist ein Beispiel einer elektrischen Löseeinheit gezeigt, die mittels eines Elektromotors 17 betätigbar ist. Der Elektromotor 17 weist vorzugsweise eine drehend antreibbare Antriebsspindel auf. Die elektrische Löseeinheit sieht ferner eine Zug- und/oder Druckstange 1 vor, die entlang einer Stangenlängsachse innerhalb eines Gehäuses 18 verstellbar ist und die eine Steuerkurve 2 zur Führung eines Steuerglieds 3 aufweist mit einem zumindest teilweise spiralförmigen, mehrere Steigungsabschnitte 4, 5 aufweisenden Wendelabschnitt 8 aufweist.
Im vorliegenden Ausführungsbeispiel ist das Steuerglied 3 im Gehäuse 18 axial festgelegt. Wenn die Zug- und/oder Druckstange 1 gespindelt wird, führt dies zu deren axialen Verstellung innerhalb des Gehäuses 18. Zur Entkopplung der Spindelbewegung ist auf der dem Elektromotor 17 abgewandten Seite eine drehbare Kappe 16 bzw. ein Axiallager angeordnet. Die Zug- und/oder Druckstange 1 ist vorzugsweise entsprechend dem Ausführungsbeispiel nach Fig. 1a bis 1e gebildet und umfasst einen ersten Leerhubabschnitt 9, der sich im Wesentlichen radial zur Stangelängsachse erstreckt und der sich an dem Wendelabschnitt 8 anschließt. Des Weiteren ist an den Wendelabschnitt 8 ein zweiter Leerhubabschnitt 10 angeschlossen, der ebenfalls im Wesentlichen radial zur Stangenlängsachse ausgebildet ist.

Auf der der drehbaren Kappe 16 abgewandten Seite der Zug- und/oder Druckstange 1 ist ein sich erstreckender Fortsatz 14 unrunden Querschnitts vorgesehen, über den die Drehbewegung des Elektromotors 17 auf die Zug- und/oder Druckstange 1 übertragbar ist.

Im vorliegenden Ausführungsbeispiel ist das Steuerglied 3, das in die Steuerkurve 2 eingreift, als ein Steuerbolzen 19 gebildet, der im Gehäuse 18 der elektrischen Löseeinheit axial festgelegt ist. Dabei ist es auch möglich, dass der Bolzen um seine Bolzenlängsachse verdrehbar gelagert ist, wodurch ein Blockieren bzw. Verkanten der Steuerkurve 2 mit dem Steuerbolzen 19 zusätzlich verhindert wird.

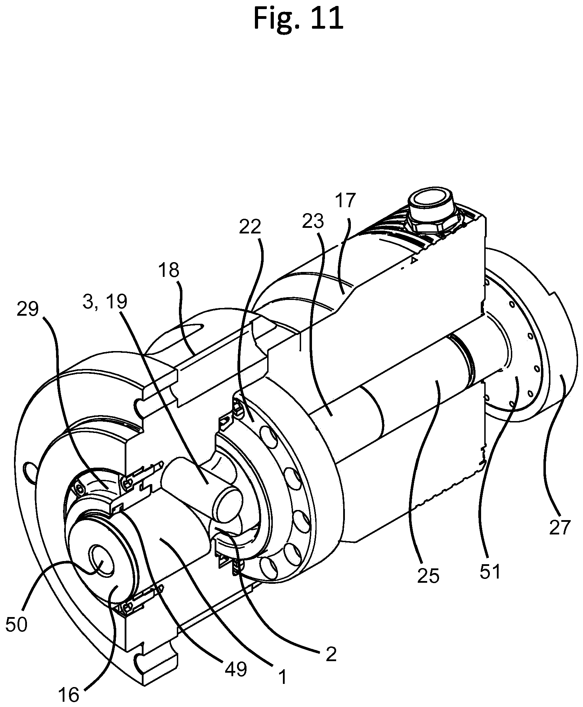

In Fig. 11 ist die elektrische Löseeinheit in der Spannstellung gezeigt, wobei der Steuerbolzen 19 im zweiten Leerhubabschnitt 10 (obere Endlage) positioniert ist. Da sich der Steuerbolzen 19 in einem Leerhubabschnitt 10 befindet, ist die Zug- und/oder Druckstange 1 axial im Gehäuse 18 verriegelt.

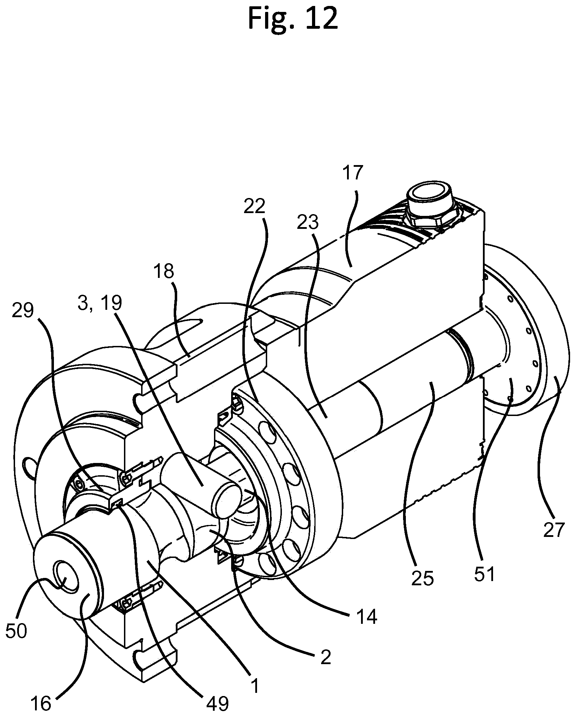

Um die Zug- und/oder Druckstange 1 in die in Fig. 12 gezeigte Lösestellung zu bewegen, wird der Elektromotor 17 angetrieben, der seine Drehbewegung wiederum auf den Fortsatz 14 der Zug- und /oder Druckstange 1 überträgt. Durch die Drehung der Zug- und/oder Druckstange 1 gleitet der Steuerbolzen 19 - zunächst ohne eine Hubbewegung der Stange - entlang des Leerhubabschnitts 10. Der Elektromotor 17 kann also - hubfrei - sein volles Drehmoment bzw. seine volle Drehzahl aufbauen bevor der Steuerbolzen 19 an den Wendelabschnitt 8 gelangt. Erst das Gleiten des Steuerbolzens 19 im Wendelabschnitt 8 bewirkt eine Hubbewegung der Zug- und/oder Druckstange 1 relativ zum Gehäuse 18.

Im vorliegenden Ausführungsbeispiel gelangt der Steuerbolzen 19 zunächst an den zweiten Steigungsabschnitt 5 des Wendelabschnitts 8 mit einer großen Steigung gegenüber der Normalen zur Stangenlängsachse, der einen Eilhub bereitstellt. Wird die Zug- und/oder Druckstange 1 weiter verdreht, so erreicht der Steuerbolzen 19 den ersten Steigungsabschnitt 4 des Wendelabschnitts 8 mit einer geringen Steigung gegenüber der Normalen zur Stangenlängsachse, der einen Krafthub bereitstellt.

Mit anderen Worten bedeutet also die Verwendung einer hohen Steigung bei einem Steigungsabschnitt 4, 5, 6, 7, dass ein großer Axialhub mit geringer Kraft erfolgt, wobei eine geringe Steigung eines Steigungsabschnitts 4, 5, 6, 7 einen geringen axialen Hub mit einer hohen Kraft zur Folge hat.

Hat der Steuerbolzen 19 dann auch den ersten Steigungsabschnitt 4 (Krafthub) durchlaufen, so gelangt der Führungsbolzen 19 zum ersten Leerhubabschnitt 9 der Steuerkurve 2, wobei dadurch die Zug- und/oder Druckstange 1 in der Lösestellung verriegelt ist und kein Axialhub mehr möglich ist (hintere Endlage der Stange).

Um die elektrische Löseeinheit aus der Lösestellung zurück in die Spannstellung zu bewegen, ist die Zug- und/oder Druckstange 1 in der entgegengesetzten Richtung zu verdrehen, wodurch der Führungsbolzen 19 die Steuerkurve 2 in entgegengesetzter Richtung durchläuft, bis er wieder den zweiten Leerhubabschnitt 10 erreicht hat (vordere Endlage der Stange).

Damit auf den Fortsatz 14 bzw. auf die Zug- und/oder Druckstange 1 ein hohes Drehmoment übertragen werden kann, hat es sich als sinnvoll erwiesen, dass zwischen dem Abtrieb, bzw. der Antriebsspindel des Elektromotors 17 und der Zug- und/oder Druckstange 1 ein Exzentergetriebe, vorzugsweise ein Wellgetriebe angeordnet ist. Vorzugsweise stellt das Exzentergetriebe dabei eine relativ große Untersetzung bereit, vorliegend z.B. 1 zu 50.

Der Elektromotor 17 bzw. die Antriebsspindel der beispielhaften Ausführungsform umfasst einen Anschraubflansch 21, der zumindest mittelbar drehfest mit der Zug- und/oder Druckstange 1 gekoppelt ist. Vorliegend ist die Antriebsspindel über das Wellgetriebe also mit dem Anschraubflansch 21 und dieser wiederum mit einem Mitnehmerflansch 22 verbunden, der einen sich axial erstreckenden Mitnehmerbund 23 aufweist. Innerhalb des Gehäuses 18 ist ein koaxial zum Abtrieb des Elektromotors 17 angeordneter Dichtring 48 bzw. Gleitring angeordnet, zur Abdichtung des Innenraums bzw. alternativ zur Gleitlagerung des Mitnehmerflansches 22. Mit dem Mitnehmerbund 23 ist ein Antriebsflansch 24 unrunden Querschnitts verbunden, der mit dem Fortsatz 14 der Zug- und/oder Druckstange 1 drehfest, aber axial verschiebbar gekoppelt ist. Der Mitnehmerflansch 22, der Mitnehmerbund 23 und der Antriebsflansch 24 können dabei einzeln, aber auch zumindest teilweise einteilig ausgestaltet sein. Der Anschraubflansch 21 stellt in der Regel einen Teil des Elektromotors 17 dar.

Damit die Verstellung der Zug- und/oder Druckstange 1 innerhalb des Gehäuses 18 eine möglichst geringe Kraft erfordert, ist dem Gehäuse 18 eine Gleitbuchse 29 zugeordnet, die die Zug- und/oder Druckstange 1 umschließt. Vorliegend ist die Gleitbuchse 29 stirnseitig mit dem Gehäuse 18 verschraubt. Innerhalb dieser Gleitbuchse 29 ist zusätzlich eine abstreifende Gleitringdichtung 49 in einer Gleitringaufnahme aufgenommen, die z.B. aus einem selbstschmierenden Kunststoff geformt ist. Die Gleitringdichtung 49 dichtet nach innen und verhindert das Eindringen von Schmutz von außen (abstreifen). Zur Gewichtsreduktion bzw. zur Durchführung von Medien (Fluiden), weist die Zug- und/oder Druckstange 1 einen in Längsrichtung ausgebildeten Kanal 50 auf.

Die gezeigte elektrische Löseeinheit ist dahingehend vorteilhaft weitergebildet, dass der Mitnehmerbund 23 drehfest mit einer Sensorhülse 25 gekoppelt ist, die ein mit einer Umfangssteigung 26 versehenes Sensortarget 27 aufweist. Die Sensorhülse 25 ist mehrteilig mit einem Targethalter 51 ausgestaltet, mit dem das Sensortarget 27 lösbar oder fest verbunden ist.

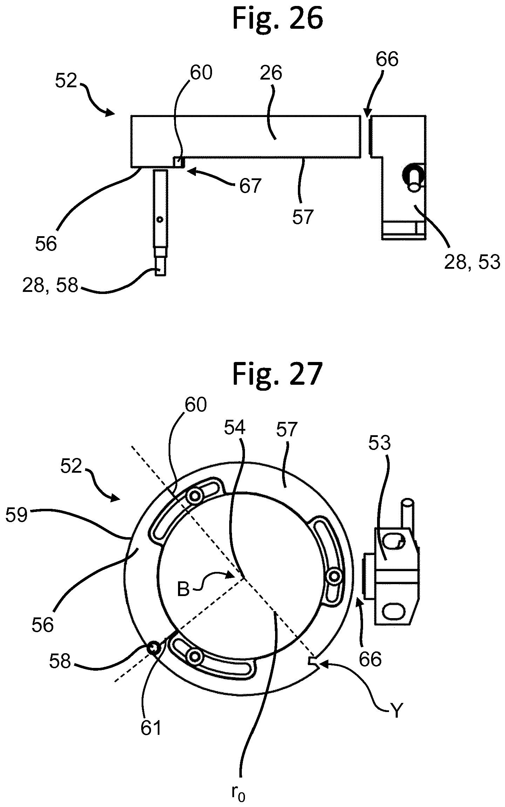

Das Sensortarget 27 als solches ist Bestandteil eines Sensorsystems 52 zur Messung der axialen Lage eines Elements, z.B. einer Zug- und/oder Druckstange 1 der vorliegenden Erfindung. Das hiermit isoliert offenbarte Sensorsystem 52 soll nachstehend anhand der Fig. 27 bis 29 näher erläutert werden. Es kann dabei auch bei einer Vereinzelungsvorrichtung, bei einer Greifvorrichtung oder auch bei einem Parallelgreifer bzw. bei Systemen Einsatz finden, bei denen eine genaue Detektierung und Auflösung einer Umdrehung von Vorteil ist.

Das Sensortarget 27 weist eine Umfangssteigung 26 auf, d.h. das Sensortarget 27 ist - je nach Drehlage und Drehrichtung - mit einem ansteigenden bzw. abfallenden Radius gebildet. Vorzugsweise lässt sich der vom Drehwinkel A abhängige Radius r(A) am Außenumfang des Sensortargets 27 durch die folgende Formel ausdrücken: Radius r(A) = r0 + (Y x A / 360 Grad); wobei A der Drehwinkel, r0 der Grundradius und Y der maximale Zuschlag zum Radius r0 ist. Damit liegt je nach Drehlage des Sensortargets 27 ein anderer radialer Abstand 66 von einem stationär - vorzugsweise am Gehäuse 18 - angeordneten Abstandssensor 53 (Wegsensor) vor. Ebenso ist der Abstand der Außenseite zum Mittelpunkt 54 des Targets abhängig vom Drehwinkel A.

Das Sensortarget 27 weist an seiner Stirnseite 55, d.h. seiner dem Elektromotor 17 abgewandten Seite, eine sich zumindest teilweise über den Umfang erstreckende Erhöhung 56 auf. Diese Erhöhung 56 ist gegenüber einer Grundfläche 57 erhöht, vorzugsweise um einen Betrag zwischen 2 und 4 mm, vorzugsweise um genau 3 mm. Stirnseitig ist ein Abstandssensor 58, insbesondere ein induktiver Näherungsschalter angeordnet, der den Abstand 67 zur Stirnseite 55 des Sensortargets 27 erfasst. Dabei ist der Abstand 67 geringer, wenn sich das Sensortarget 27 in einer Drehlage befindet, in der die Erhöhung 56 dem Abstandssensor 58 gegenüberliegt. Umgekehrt ist der Abstand 67 größer, wenn die Grundfläche 57 dem Abstandssensor 58 gegenüberliegt.

Damit ist der Vorteil verbunden, dass nun unterschieden werden kann, ob die Drehbewegung einem Leerhub, oder einer tatsächlichen axialen Verstellung (Hubbewegung) entspricht. Dabei gibt der Bogenabschnitt 59 der Erhöhung 56 vor, um wieviel Grad sich der jeweilige Leerhubabschnitt 9, 10, 11 der Steuerkurve 2 radial zur Stangenlängsachse erstreckt. Der Öffnungswinkel B einer vom Mittelpunkt 54 des Sensortargets 27 ausgehenden Geraden zur ersten Stufe 60 der Erhöhung 56 und einer vom Mittelpunkt 54 des Sensortargets 27 ausgehenden Geraden zur zweiten Stufe 61 der Erhöhung 56 ist dabei identisch mit demjenigen Öffnungswinkel unter dem sich der bzw. die Leerhubabschnitte 9, 10, 11 erstrecken. Wenn sich der Leerhubabschnitt 9, 10, 11 also um 90 Grad erstreckt, so beträgt der Öffnungswinkel zwischen der ersten Stufe 60 und der zweiten Stufe 61 bezüglich des Mittelpunktes 54 des Targets 27 ebenfalls 90 Grad. Es kann also durch die Erhöhung 56 stirnseitig erfasst werden, ob ein Axialhub erfolgt.

Der Betrag, um den der Axialhub erfolgt, wird hingegen durch die radiale Entfernung zwischen dem Sensortarget 27 und dem radial angeordneten Abstandssensor 53 erfasst. Je weiter das Sensortarget 27 verdreht wird, desto geringer ist der Abstand 66 zwischen dem Wegsensor und dem Sensortarget 27 aufgrund der in Umfangsrichtung angeordneten Umfangssteigung 26. Die Messung des Axialhubs wird im gezeigten Ausführungsbeispiel dabei über 270 Grad hinweg erfasst. Erst wenn eine 270 Grad-Drehung erreicht ist, verringert sich der stirnseitige Abstand 67 des Sensortargets 27 zum stirnseitigen Abstandssensor 58 wieder, wodurch detektiert wird, dass ein Steuerglied 3 erneut einen Leerhubabschnitt 9, 10, 11 erreicht hat. Durch die Kombination aus Abstandsmessung durch den radialen Abstandssensor 53 und durch den axialen induktiven Näherungsschalter 58 kann die jeweilige Endlage (obere oder untere Endlage) eindeutig detektiert werden.

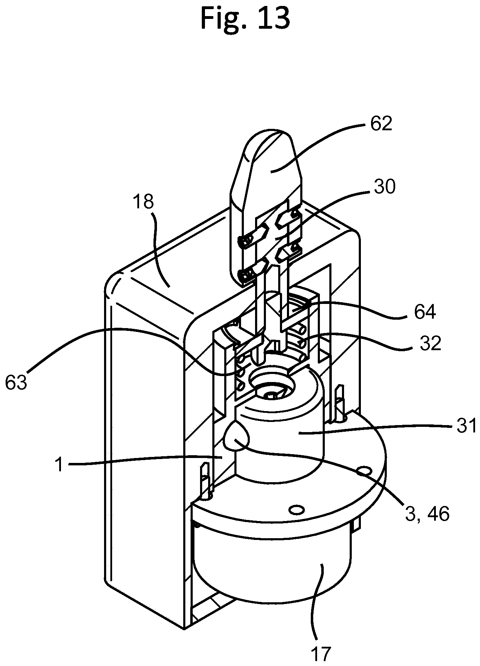

In den Fig. 13 bis 16 ist eine elektrische Vereinzelungsvorrichtung gezeigt, mit einer in einem Gehäuse 18 drehfest, aber axial verschiebbar geführten und mit einem Vereinzelungsfinger 30 verbundenen Zug- und/oder Druckstange 1. Diese Zug- und/oder Druckstange 1 ist entlang einer Stangenlängsachse verstellbar und weist eine Steuerkurve 2 zur Führung eines Steuerglieds 3 auf, die einen zumindest teilweise spiralförmigen, mehrere Steigungsabschnitte 4, 5 aufweisenden Wendelabschnitt 8 umfasst.
Im gezeigten Ausführungsbeispiel schließt sich an den Wendelabschnitt 8 der Steuerkurve 2 einen sich im Wesentlichen radial zur Stangenlängsachse erstreckender Leerhubabschnitt 9, 10 an. Vorliegend sind zwei Leerhubabschnitte 9, 10 vorgesehen, wobei die Steuerkurve 2 in Form einer Wendelnut geformt ist. Die Zug- und/oder Druckstange 1 ist zusätzlich zumindest teilweise als eine Hohlstange gebildet, wobei die Steuerkurve 2 in einem Innenumfang 13 der Hohlstange ausgebildet ist.
Die Zug- und/oder Druckstange 1 der elektrischen Vereinzelungsvorrichtung entspricht dabei im Wesentlichen der Zug- und/oder Druckstange 1 aus Fig. 8a bis 8e. In die zylindrisch ausgeformte Innenausnehmung 43 greift ein rotationssymmetrisches Stellelement 31 ein, das drehfest mit der Antriebsspindel eines Elektromotors 17 verbunden ist. An diesem Stellelement 31 ist ein Steuerglied 3 in Form einer Steuerkalotte 46 angeordnet, welches in die Steuerkurve 2 eingreift zur axialen Verstellung der Zug- und/oder Druckstange 1 zwischen einer Vereinzelungsstellung und einer Durchlassstellung.

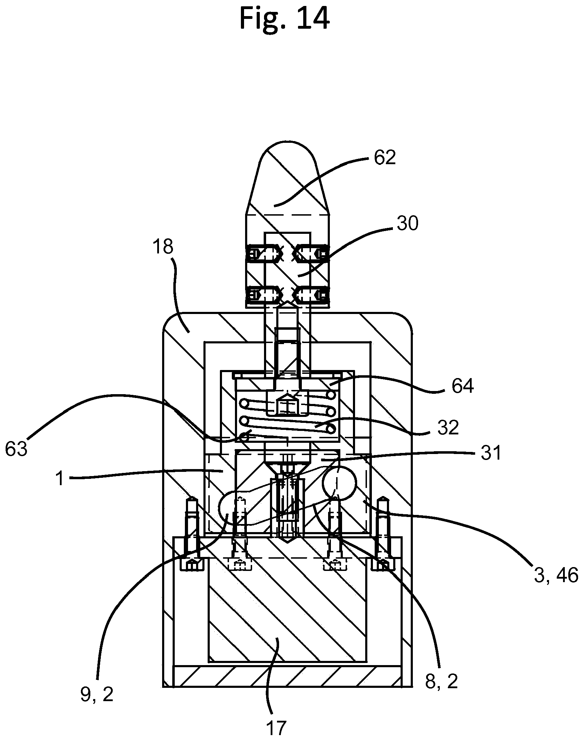

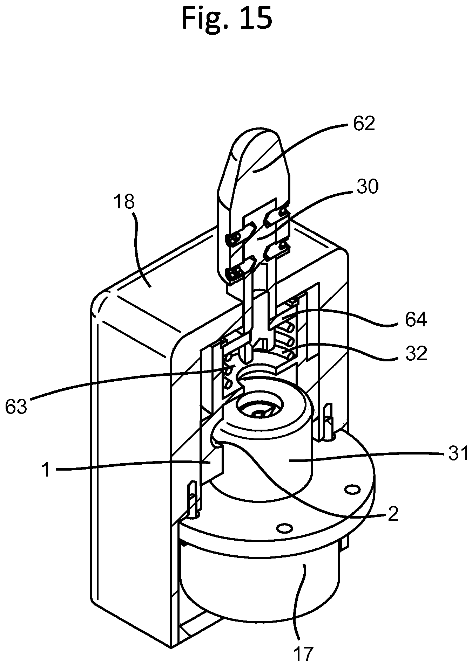

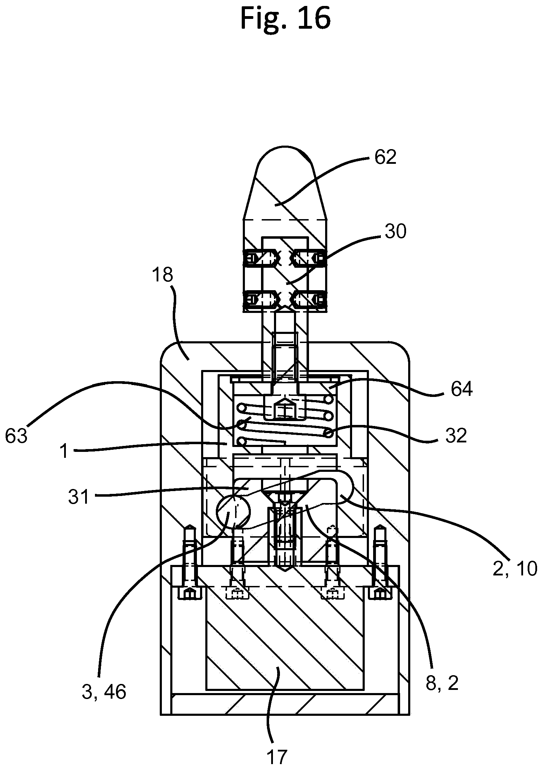

In Fig. 13 und 14 ist die elektrische Vereinzelungsvorrichtung in der Durchlassstellung, in Fig. 15 und 16 in der Vereinzelungsstellung gezeigt. Die Zug- und/oder Druckstange 1 ist mit einem Vereinzelungsfinger 30 verbunden und gleichzeitig drehfest, aber axial verschiebbar im Gehäuse 18 geführt. Vorliegend ist ihr Außenumfang 12 unrund gebildet als ein Mehrkant, insbesondere als ein Sechskant. Die Innenkontur des Gehäuses 18 ist derart gebildet, dass die Zug- und/oder Druckstange 1 drehfest, aber axial verschiebbar im Gehäuse 18 geführt ist.

An dem Vereinzelungsfinger 30 ist zusätzlich eine vorzugsweise aus Kunststoff gebildete Schutzkappe 62 angebracht. Zur Dämpfung axial auf den Vereinzelungsfinger 30 einwirkende Kräfte ist in der Zug- und/oder Druckstange 1 ein Federpaket angeordnet. Vorliegend ist eine topfförmige Ausnehmung 63 auf der dem Elektromotor 17 abgewandten Seite der Zug- und/oder Druckstange 1 ausgebildet, in der eine Feder 32, vorliegend eine Spiralfeder (Druckfeder) eingelegt ist. Diese Druckfeder stützt sich an einem Bund 64 des Vereinzelungsfingers 30 ab, der vorliegend durch eine Schraube lösbar am Vereinzelungsfinger 30 befestigt ist. Dieser Bund 64 ist wiederum mittels eines Sprengrings im Federtopf der Zug- und/oder Druckstange 1 gesichert. Wirken nun in der Spannstellung zu große Kräfte auf den Vereinzelungsfinger 30 in Richtung des Elektromotors 17 ein, so wird die Feder 32 komprimiert und der Bund 64 weicht in die Zug- und/oder Druckstange 1, d.h. in Richtung des Elektromotors 17 zurück.

Wird der Elektromotor 17 angetrieben, so wird das Stellelement 31 verdreht, wodurch das Steuerglied 3 in der Steuerkurve 2 gleitet zu der in Fig. 15 und 16 dargestellten Position (Vereinzelungsstellung). In dieser Position befindet sich das als Kugel gebildete Steuerglied 3 in einem Leerhubabschnitt 9, so dass die Zug- und/oder Druckstange 1 axial verriegelt ist. Eine axiale Bewegung des Vereinzelungsfingers 30 ist nur noch entgegen der Federkraft der Feder 32 möglich. Da die Steuerkurve 2 als eine Wendelnut gebildet ist, kann der Elektromotor 17 richtungsgleich, d.h. ohne die Drehrichtung ändern zu müssen, weiter angetrieben werden, wodurch die Zug- und/oder Druckstange 1 wieder zu der in Fig. 13 und 14 dargestellten Position zurückgekehrt (Durchlassstellung). Eine alternative Ausführungsform der Vereinzelungsvorrichtung verzichtet auf den Einsatz einer Feder 32.

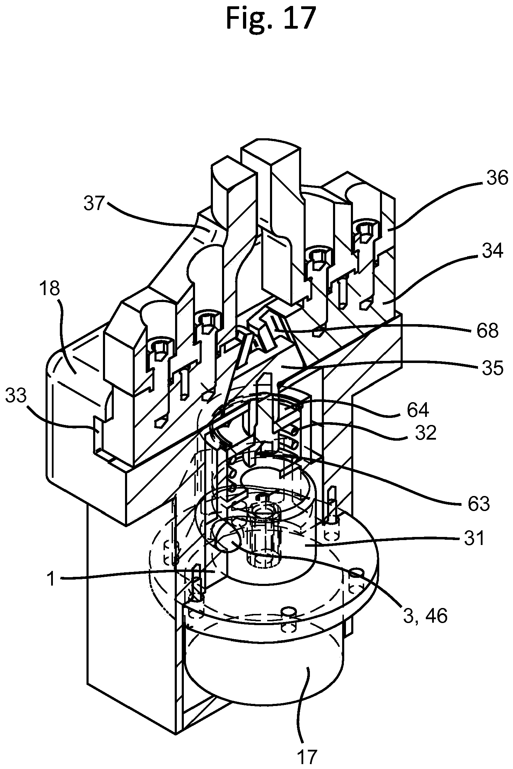

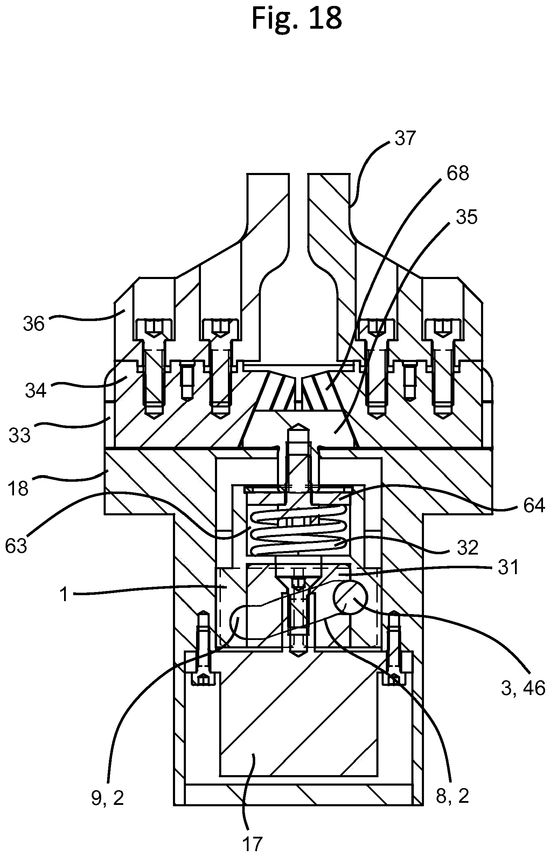

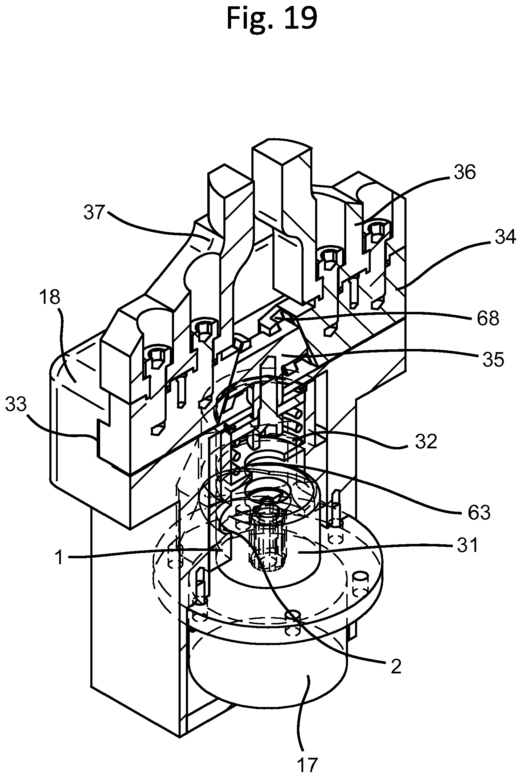

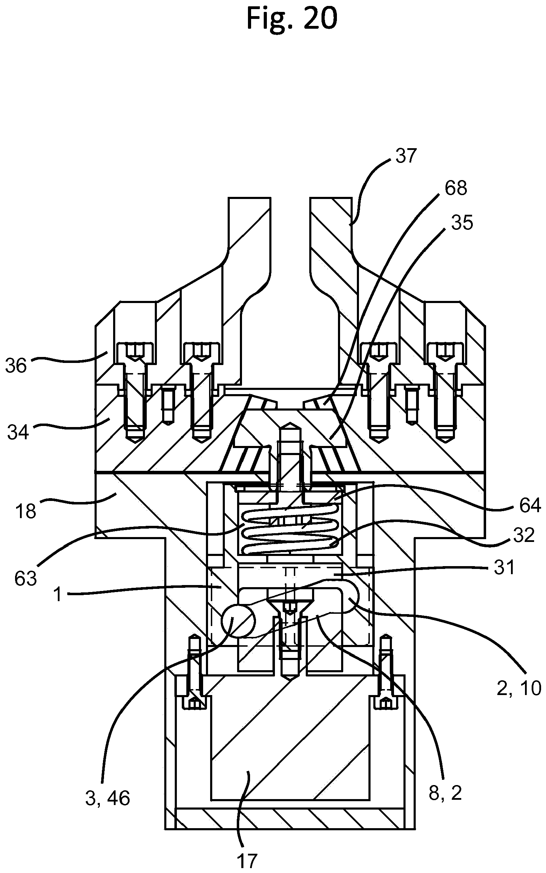

In Fig. 17 bis 20 ist ein weiteres Anwendungsbeispiel der erfindungsgemäßen Zug- und/oder Druckstange 1 gezeigt. Diese Figuren zeigen eine elektrische Greifvorrichtung mit in radial zur Greiferlängsachse verstellbaren und in Greifernuten 33 geführten Greifergrundbacken 34, die über geneigt zur Greiferlängsachse verlaufende Keilnuten 68 mit einem axial verstellbaren Keilhaken 35 wechselwirken. Dieser Keilhaken 35 ist mit einer Zug- und/oder Druckstange 1 verbunden. Diese Zug- und/oder Druckstange 1 ist entlang einer Stangenlängsachse verstellbar und weist eine Steuerkurve 2 zur Führung eines Steuerglieds 3 auf, die einen zumindest teilweise spiralförmigen, mehrere Steigungsabschnitte 4, 5 aufweisenden Wendelabschnitt 8 umfasst.
Gemäß dem vorliegenden Ausführungsbeispiel ist die Zug- und/oder Druckstange 1 zumindest teilweise als eine Hohlstange gebildet, wobei die Steuerkurve 2 in einem Innenumfang 13 der Hohlstange ausgebildet ist. Alternativ kann selbstverständlich die Steuerkurve 2 auch an einem Außenumfang 12 ausgebildet sein. Die Zug- und/oder Druckstange 1 entspricht im Wesentlichen der Zug- und/oder Druckstange 1 gemäß Fig. 8a bis 8e. Vorliegend ist ein Elektromotor 17 vorgesehen, der drehfest mit einem Stellelement 31 gekoppelt ist, an dem ein Steuerglied 3 angeordnet ist. Das Steuerglied 3 greift in die als Wendelnut gebildete Steuerkurve 2 ein zur axialen Verstellung der Zug- und/oder Druckstange 1 zwischen einer Geschlossenstellung und einer Offenstellung (und ggfs. einer Spannstellung, die zwischen der Geschlossenstellung und der Offenstellung liegt). Wird die Zug- und/oder Druckstange 1 axial nach vorn, d.h. in Richtung der Greifernuten 33 verstellt, so zwingt der Keilhaken 35 bzw. der Keilkegel die Greifergrundbacken 34 radial nach außen innerhalb der Greifernuten 33. Dies entspricht bei einem Greifer gemäß Fig. 17 bis 20 einer Bewegung in die Spannstellung bzw. Geschlossenstellung. In diesem Fall gleitet das Steuerglied 3 innerhalb der Steuerkurve 2 entlang des Wendelabschnitts 8 hin zu einem sich an den Wendelabschnitt anschließenden, im Wesentlichen radial zur Stangenlängsachse erstreckenden ersten Leerhubabschnitt 4. Innerhalb dieses ersten Leerhubabschnitts 4 ist eine axiale Bewegung der Zug- und/oder Druckstange 1 verhindert und diese daher axial verriegelt. Wird das Stellelement 31 weiter verdreht, so gleitet das Führungsglied 3 innerhalb der Führungsnut 2 wieder in Richtung des zweiten Leerhubabschnittes 5 zurück, wodurch sich der Greifer gemäß Fig. 17 bis 20 wieder öffnet zur Offenstellung.

Sobald das Steuerglied 3 wieder den ersten Leerhubabschnitt 4 erreicht hat, ist die Zug- und/oder Druckstange 1 wiederum axial im Gehäuse 18 festgelegt, d.h. verriegelt.

In dieser Ausführungsform einer elektrischen Greifvorrichtung ist in der Zug- und/oder Druckstange 1 eine Feder 32 angeordnet zur Dämpfung radial auf die Greifergrundbacken 34 einwirkender Kräfte. Die Anordnung des Federpakets entspricht dabei wiederum der Anordnung, die bereits bei der Vereinzelungsvorrichtung beschrieben wurde. Durch eine geänderte Anordnung des Federpakets wird der Greifer für das Außengreifen angepasst.

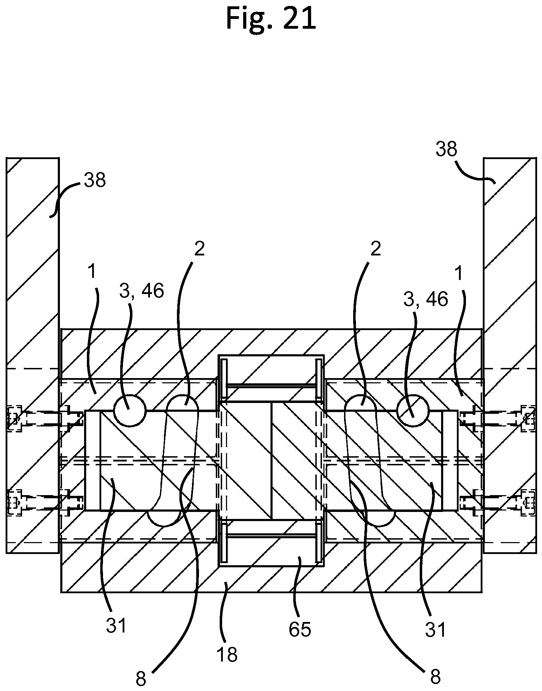

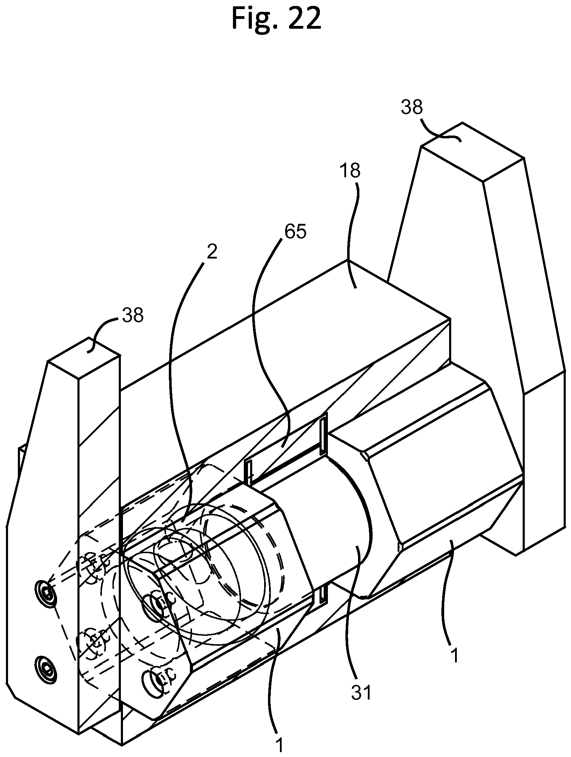

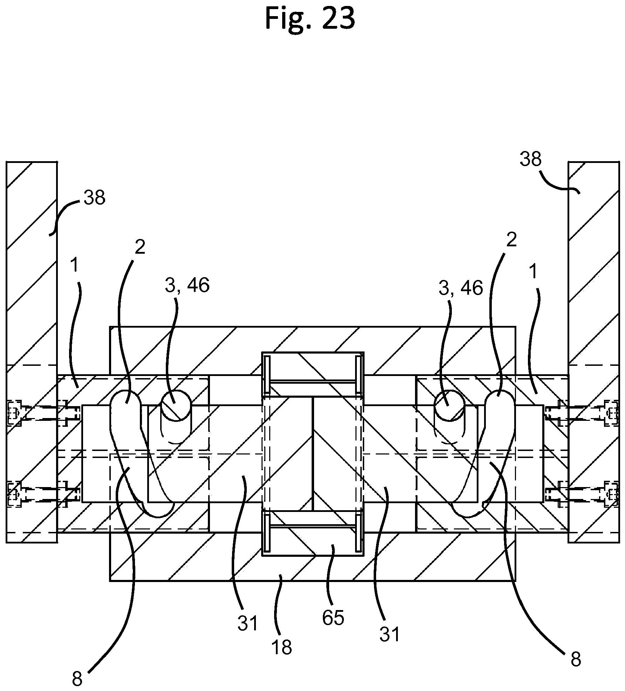

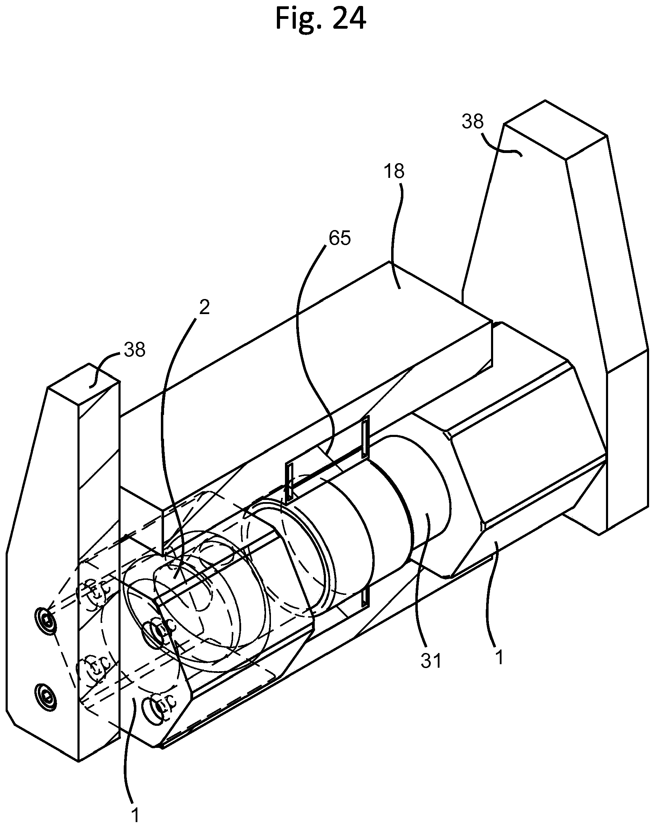

In Fig. 21 bis 24 ist eine Greifvorrichtung in Form eines elektrischen Parallelgreifers gezeigt. Dieser Parallelgreifer umfasst zwei Greiferarme 38, mit einer zur Anzahl der Greiferarme 38 korrespondierenden Anzahl an Zug- und/oder Druckstangen 1. Mit jeder Zug- und/oder Druckstange 1 ist im vorliegenden Ausführungsbeispiel je ein Greiferarm 38 lösbar verbunden. Die Zug- und/oder Druckstangen 1 sind dabei teilweise als eine Hohlstange gebildet, wobei am Innenumfang 13 der Hohlstange eine Steuerkurve 2 zur Führung eines Steuerglieds 3 ausgebildet ist, die einen zumindest teilweise spiralförmigen, mehrere Steigungsabschnitte 4, 5 aufweisenden Wendelabschnitt 8 umfasst.
Wie sich aus Fig. 22 und 24 ergibt, besitzt die Zug- und/oder Druckstange 1 eine rotationssymmetrische Innenausnehmung 43, in die ein zumindest mittelbar drehfest mit einem Elektromotor 17 verbundenes Stellelement 31 eingreift. Das zweiteilig geformt Stellelement 31 weist zwei Steuerglieder 3 auf, welche jeweils in eine der Steuerkurven 2 der Zug- und/oder Druckstangen eingreift zur axialen Verstellung der Zug- und/oder Druckstangen 1 zwischen einer Geschlossenstellung (Fig. 21 und 22) bzw. einer Spannstellung und einer Offenstellung (Fig. 23 und 24). Die Spannstellung liegt vorzugsweise zwischen der Offenstellung und der Geschlossenstellung. Die Geschlossenstellung kann alternativ auch der Spannstellung entsprechen.
Im vorliegenden Ausführungsbeispiel sind zwar zwei einzelne, in die jeweiligen Hohlstangen eingreifende Stellelemente 31 vorgesehen, die beiden einzelnen Stellelemente können aber auch einstückig geformt sein. Dadurch ist die Übertragung der Drehbewegung vom Elektromotor 17, der vorliegend als ein Torquemotor 65 gebildet ist, auf die Stellelemente 31 vereinfacht. Die Zug- und/oder Druckstangen 1 entsprechen dabei im Wesentlichen der Zug- und/oder Druckstange 1 gemäß Fig. 7a bis 7e. Um die Zug- und/oder Druckstangen 1 axial verschiebbar, aber drehfest im Gehäuse 18 zu lagern, besitzen diese ebenfalls eine Außenkontur unrunden Querschnitts, vorliegend ein Mehrkant, insbesondere ein Sechskant. Die Steuerkurve 2 ist mit einem ersten Leerhubabschnitt 9 gebildet, an den sich ein Wendelabschnitt 8 anschließt. Am anderen Ende des Wendelabschnitts 8 ist ein zweiter Leerhubabschnitt 10 angeordnet, der die Endstellung (Spannstellung) vorgibt. Wird der mittig angeordnete Torquemotor 65 angetrieben, so nimmt er die Stellelemente 31 mit den Steuergliedern 3 mit. Dadurch können die Steuerglieder 3 innerhalb der Steuerkurve 2 gleitend zwischen der Spannstellung und der Lösestellung umgeschaltet werden.

In einer alternativen Ausführungsform ist es vorgesehen, dass einer der Greiferarme 38 als feststehender, d.h. gegenüber dem Gehäuse 18 festgelegter Greiferarm 38 gebildet ist. Der feststehende Greiferarm 38 kann nicht mit einer Zug- und/oder Druckstange betätigt werden. Der mindestens eine weitere - nicht feststehende - Greiferarm 38 ist jedoch mittels einer Zug- und/oder Druckstange 1 gemäß der vorliegenden Erfindung betätigbar, um den Parallelgreifer zwischen einer Geschlossenstellung, ggfs. einer Spannstellung und einer Offenstellung umzuschalten.

### Bezugszeichenliste

- 1: Zug und/oder Druckstange
- 2: Steuerkurve
- 3: Steuerglied
- 4: erster Steigungsabschnitt
- 5: zweiter Steigungsabschnitt
- 6: dritter Steigungsabschnitt
- 7: vierter Steigungsabschnitt
- 8, 8': Wendelabschnitt
- 9: erster Leerhubabschnitt
- 10: zweiter Leerhubabschnitt
- 11: dritter Leerhubabschnitt
- 12: Außenumfang
- 13: Innenumfang
- 14: Fortsatz
- 15: Innenumfang
- 16: Kappe
- 17: Elektromotor
- 18: Gehäuse
- 19: Steuerbolzen
- 20: Steuerkugel
- 21: Anschraubflansch
- 22: Mitnehmerflansch
- 23: Mitnehmerbund
- 24: Antriebsflansch
- 25: Sensorhülse
- 26: Umfangssteigung
- 27: Sensortarget
- 28: Abstandssensor
- 29: Gleitbuchse
- 30: Vereinzelungsfinger
- 31: Stellelement
- 32: Feder
- 33: Greifernuten
- 34: Greifergrundbacken
- 35: Keilhaken
- 36: Aufsatzbacken
- 37: Greiferflächen
- 38: Greiferarme
- 39: Wendelcharakteristik
- 40: Axialstellsystem
- 41: Stellfortsatz
- 42: Aufnahmetasche
- 43: Innenausnehmung
- 44: erster Wendelabschnitt
- 45: zweiter Wendelabschnitt
- 46: Steuerkalotte
- 47: Zug- bzw. Drehfläche
- 48: Dichtring
- 49: Gleitringdichtung
- 50: Kanal
- 51: Targethalter
- 52: Sensorsystem
- 53: Abstandssensor (radial)
- 54: Mittelpunkt
- 55: Stirnseite
- 56: Erhöhung
- 57: Grundfläche
- 58: Abstandssensor (koaxial)
- 59: Bogenabschnitt
- 60: erste Stufe
- 61: zweite Stufe
- 62: Schutzkappe
- 63: Ausnehmung
- 64: Bund
- 65: Torquemotor
- 66: Abstand (radial)
- 67: Abstand (axial)
- 68: Keilnuten

## Patentansprüche

1. Zug- und/oder Druckstange (1) für die Spann- und Greiftechnik, die entlang einer Stangenlängsachse verstellbar ist, mit einer Steuerkurve (2) zur Führung eines Steuerglieds (3), die einen zumindest teilweise spiralförmigen, mehrere Steigungsabschnitte (4; 5; 6; 7) aufweisenden Wendelabschnitt (8) umfasst, wobei die Steuerkurve (2) mindestens einen sich an den Wendelabschnitt (8) anschließenden, im Wesentlichen radial zur Stangenlängsachse erstreckenden Leerhubabschnitt (9; 10; 11) umfasst, **dadurch gekennzeichnet, dass** der Leerhubabschnitt (9; 10; 11) dafür vorgesehen ist, die axiale Bewegung der Zug- und/oder Druckstange (1) zu blockieren und die Zug- und /oder Druckstange axial in ihrer Lage zu fixieren, und dass der Wendelabschnitt (8) einen ersten Steigungsabschnitt (4) mit geringer Steigung für einen Axialhub mit einer großen Kraft sowie einen zweiten Steigungsabschnitt (5) mit hoher Steigung für einen Axialhub in kürzerer Zeit, dafür mit einer geringeren Kraft vorsieht.

2. Zug- und/oder Druckstange (1) nach Anspruch 1, **dadurch gekennzeichnet, dass** der erste Steigungsabschnitt (4) gegenüber einer Normalen zur Stangenlängsachse zwischen 2 Grad und 6 Grad geneigt ist, und dass der zweite Steigungsabschnitt (5) gegenüber einer Normalen zur Stangenlängsachse zwischen 14 Grad und 22 Grad geneigt ist.

3. Zug- und/oder Druckstange (1) nach Anspruch 1 oder 2, **dadurch gekennzeichnet, dass** die Steuerkurve (2) an einem Außenumfang (12) ausgebildet ist.

4. Zug- und/oder Druckstange (1) nach Anspruch 1 oder 2, **dadurch gekennzeichnet, dass** die Zug- und/oder Druckstange (1) zumindest teilweise als eine Hohlstange gebildet ist, und dass die Steuerkurve (2) in einem Innenumfang (13) der Hohlstange ausgebildet ist.

5. Zug- und/oder Druckstange (1) nach einem der Ansprüche 1 bis 4, **dadurch gekennzeichnet, dass** ein Fortsatz (14) unrunden Querschnitts oder eine Innenaufnahme (15) unrunden Querschnitts vorgesehen ist.

6. Zug- und/oder Druckstange (1) nach Anspruch 5, **dadurch gekennzeichnet, dass** auf der dem Fortsatz (14) oder der Innenaufnahme (15) abgewandten Seite eine drehbare Kappe (16) und/oder ein Axiallager angeordnet ist.

7. Elektrische Löseeinheit mit einer Zug- und/oder Druckstange (1) nach einem der Ansprüche 1 bis 6, mit einem Elektromotor (17), der zumindest mittelbar drehfest mit der Zug- und/oder Druckstange (1) gekoppelt ist, sowie mit einem in einem Gehäuse (18) zumindest axial festgelegten Steuerglied (3), das in die Steuerkurve (2) eingreift zur axialen Verstellung der Zug- und/oder Druckstange (1) zwischen einer Spannstellung und einer Lösestellung.

8. Elektrische Löseeinheit nach Anspruch 7, **dadurch gekennzeichnet, dass** das Steuerglied (3) als ein Steuerbolzen (19) oder als eine Steuerkugel (20) gebildet ist.

9. Elektrische Löseeinheit nach Anspruch 7 oder 8, **dadurch gekennzeichnet, dass** dem Abtrieb des Elektromotors (17) ein Exzentergetriebe zugeordnet ist, das zumindest mittelbar drehfest mit der Zug- und/oder Druckstange (1) gekoppelt ist.

10. Elektrische Löseeinheit nach einem der Ansprüche 7 bis 9, **dadurch gekennzeichnet, dass** mit einer Antriebsspindel des Elektromotors (17) ein Mitnehmerflansch (22) verbunden ist, der einen sich axial erstreckenden Mitnehmerbund (23) aufweist.

11. Elektrische Löseeinheit nach Anspruch 10, **dadurch gekennzeichnet, dass** dem Mitnehmerbund (23) zum rotatorischen Antreiben der Zug- und/oder Druckstange (1) ein Antriebsflansch (14) unrunden Querschnitts zugeordnet ist.

12. Elektrische Löseeinheit nach Anspruch 10 oder 11, **dadurch gekennzeichnet, dass** der Mitnehmerbund (23) drehfest mit einer Sensorhülse (24) gekoppelt ist, die ein bezüglich der Stangenlängsachse exzentrisch angeordnetes oder mit einer Umfangssteigung (26) gebildetes Sensortarget (27) aufweist.

13. Elektrische Löseeinheit nach Anspruch 12, **dadurch gekennzeichnet, dass** dem Sensortarget (27) ein Abstandssensor (28) zugeordnet ist, wobei der Abstand des Abstandssensors (28) zum Sensortarget (27) proportional zur axialen Lage der Zug- und/oder Druckstange (1) innerhalb des Gehäuses (18) gebildet ist.

14. Elektrische Löseeinheit nach einem der Ansprüche 7 bis 13, **dadurch gekennzeichnet, dass** im Gehäuse (18) koaxial zur Stangenlängsachse ein Gleitlager und/oder eine Gleitbuchse (29) angeordnet ist.

15. Elektrischer Parallelgreifer mit einer Zug- und/oder Druckstange (1) nach einem der Ansprüche 1 bis 6, mit mindestens zwei Greiferarmen (38), wovon mindestens einer mit der Zug- und/oder Druckstange (1) betätigbar ist, mit einem zumindest mittelbar mit einem Stellelement (31) drehfest gekoppelten Elektromotor (17), sowie mit einem an dem Stellelement (31) angeordneten Steuerglied (3), das in die Steuerkurve (2) der Zug- und/oder Druckstange (1) eingreift zur axialen Verstellung zwischen einer Geschlossenstellung und einer Offenstellung.

## Claims

1. Pull and / or push rod (1) for the clamping and gripping technology, which is adjustable along a rod longitudinal axis, with a control cam (2) for guiding a control member (3) having an at least partially helical, one or more pitch sections (4; 5; 6; 7) comprising spiral section (8), whereby the control cam (2) comprises at least one idle stroke section adjoining the helical section (8) and extending substantially radially to the rod longitudinal axis, **characterized in that** the idle stroke section (9, 10, 11) is intended to block the axial movement of the pull and / or push rod and to lock the pull and / or push rod in it's axial position and **in that** the spiral section (8) comprises a first slope portion (4) with a low pitch for an axial stroke with a high force and a second slope portion (5) with a high pitch for an axial stroke in a shorter time, but with a lower force.

2. Pull and / or push rod (1) according to claim 1, **characterized in that** the first slope portion (4) is inclined relative to the normal to the rod longitudinal axis between 2 degrees and 6 degrees, and **in that** the second slope portion (5) is inclined relative to the normal to the rod longitudinal axis between 14 degrees and 22 degrees.

3. Pull and / or push rod (1) according to claim 1 or 2, **characterized in that** the control cam (2) on an outer circumference (12) is formed.

4. Pull and / or push rod (1) according to claim 1 or 2, **characterized in that** the pull and / or push rod (1) is at least partially formed as a hollow rod, and that the control cam (2) is formed in an inner circumference (13) of the hollow rod.

5. Pull and / or push rod (1) according to one of claims 1 to 4, **characterized in that** an extension (14) having a non-circular cross-section or an inner receptacle (15) having a non-circular cross-section is provided.

6. Pull and / or push rod (1) according to claim 5, **characterized in that** on a side facing away from the extension (14) or the inner receptacle (15) a rotatable cap (16) and / or a thrust bearing is arranged.

7. Electric release unit with a pull and / or push rod (1) according to one of claims 1 to 6, with an electric motor (17) which is at least indirectly non-rotatably coupled to the pull and / or push rod (1), as well as with a control member (3) that in at least axially fixed in a housing (18) which engages in the control cam (2) for the axial adjustment of the pull and / or push rod (1) between a clamping position and a release position.

8. Electric release unit according to claim 7, **characterized in that** the control member (3) is formed as control pin (19) or as a control ball (20).

9. Electric release unit according to claim 7 or 8, **characterized in that** the output of the electric motor (17) is associated with an eccentric gear, which is at least indirectly non-rotatably coupled with the pull and / or push rod (1).

10. Electric release unit according to one of claims 7 to 9, **characterized in that** a driving flange (22) having an axially extending drive collar (23) is connected to a drive spindle of the electric motor (17).

11. Electric release unit according to claim 10, **characterized in that** the drive collar (23) for rotatably driving the pull and / or push rod (1) is associated with a drive flange (14) of non-round cross-section.

12. Electric release unit according to claim 10 or 11, **characterized in that** the drive collar in non-rotatably coupled to a sensor sleeve (24) having a sensor target (27) that is eccentrically disposed relative to the rod longitudinal axis or is formed with a peripheral slope (26).

13. Electric release unit according to claim 12, **characterized in that** the sensor target (27) is associated with a distance sensor (28), wherein the distance of the distance sensor (28) to the sensor target (27) is formed proportionally to the axial position of the pull and / or push rod within the housing (18).

14. Electric release unit according to claims 7 to 12, **characterized in that** in the housing (18) a slide bearing and/or a slide bush (29) is arranged coaxially to the rod longitudinal axis.

15. Electric parallel gripper with a pull and / or push rod according to one of the claim 1 to 6 with at least two gripper arms (38), of which at least one can be actuated a pull and / or push rod (1) with an electric motor (17), which is at least indirectly non-rotatably coupled with an actuating element (31), and with a control member (3) arranged at the actuating element (31)m which engages in the cam (2) of the pull and / or push rod (1) for axial displacement between a closed position and an open position.

## Revendications

1. Barre de traction et/ou de pression (1) pour la technique de serrage et de préhension, laquelle est déplaçable le long d'un axe longitudinal de tige, comprenant une came de commande (2) pour guider un organe de commande (3), laquelle comprend une portion en hélice (8) au moins en partie spirale comportant plusieurs portions de pente (4 ; 5 ; 6 ; 7), la came de commande (2) comprenant au moins une portion de course à vide (9 ; 10 ; 11) se raccordant à la portion en hélice (8) et s'étendant sensiblement radialement par rapport à l'axe longitudinal de tige, **caractérisée en ce que** la portion de course à vide (9 ; 10 ; 11) est prévue pour bloquer le déplacement axial de la barre de traction et/ou de pression (1) et pour immobiliser la barre de traction et/ou de pression axialement dans sa position, et **en ce que** la portion en hélice (8) comporte une première portion de pente (4) à faible pente pour une course axiale avec une force élevée ainsi qu'une seconde portion de pente (5) à forte pente pour une course axiale en un temps bref, mais avec une force plus réduite.

2. Barre de traction et/ou de pression (1) selon la revendication 1, **caractérisée en ce que** la première portion de pente (4) est inclinée entre 2 degrés et 6 degrés par rapport à une normale à l'axe longitudinal de tige, et **en ce que** la seconde portion de pente (5) est inclinée entre 14 degrés et 22 degrés par rapport à une normale à l'axe longitudinal de tige.

3. Barre de traction et/ou de pression (1) selon la revendication 1 ou 2, **caractérisée en ce que** la came de commande (2) est conformée sur une périphérie extérieure (12).

4. Barre de traction et/ou de pression (1) selon la revendication 1 ou 2, **caractérisée en ce que** la barre de traction et/ou de pression (1) est conformée au moins en partie en barre creuse, et **en ce que** la came de commande (2) est conformée dans une périphérie intérieure (13) de la barre creuse.

5. Barre de traction et/ou de pression (1) selon une des revendications 1 à 4, **caractérisée en ce qu'**un prolongement (14) de section non ronde ou un logement intérieur (15) de section non ronde est prévu.

6. Barre de traction et/ou de pression (1) selon la revendication 5, **caractérisée en ce que** sur le côté situé à l'opposé du prolongement (14) ou du logement intérieur (15) est disposée une coiffe tournante (16) ou un palier axial.

7. Unité électrique de desserrage comprenant une barre de traction et/ou de pression (1) selon une des revendications 1 à 6, comprenant un moteur électrique (17) qui est couplé au moins indirectement de manière solidaire en rotation à la barre de traction et/ou de pression (1), ainsi que comprenant un organe de commande (3) qui est immobilisé axialement dans un boîtier (18) et qui s'engage dans une came de commande (2) pour le déplacement axial de la barre de traction et/ou de pression (1) entre une position serrée et une position desserrée.

8. Unité électrique de desserrage selon la revendication 7, **caractérisée en ce que** l'organe de commande (3) est conçu sous la forme d'un goujon de commande (19) ou d'une bille de commande (20).

9. Unité électrique de desserrage selon la revendication 7 ou 8, **caractérisée en ce qu'**au côté mené du moteur électrique (17) est associé un mécanisme excentrique qui est couplé au moins indirectement de manière solidaire en rotation à la barre de traction et/ou de pression (1).

10. Unité électrique de desserrage selon une des revendications 7 à 9, **caractérisée en ce qu'**à une broche d'entraînement du moteur électrique (17) est reliée une bride entraîneuse (22) qui comporte un collet entraîneur (23) s'étendant axialement.

11. Unité électrique de desserrage selon la revendication 10, **caractérisée en ce qu'**au collet entraîneur (23) est associée une bride d'entraînement (14) de section non ronde pour l'entraînement en rotation de la barre de traction et/ou de pression (1).

12. Unité électrique de desserrage selon la revendication 10 ou 11, **caractérisée en ce que** le collet entraîneur (23) est couplé de manière solidaire en rotation à un manchon de capteur (24) qui comporte une cible de capteur (27) disposée de manière excentrique par rapport à l'axe longitudinal de tige et conformée avec une pente périphérique (26).

13. Unité électrique de desserrage selon la revendication 12, **caractérisée en ce qu'**à la cible de capteur (27) est associé un capteur d'écartement (28), l'écartement du capteur d'écartement (28) par rapport à la cible de capteur (27) étant proportionnel à la position axiale de la barre de traction et/ou de pression (1) à l'intérieur du boîtier (18).

14. Unité électrique de desserrage selon une des revendications 7 à 13, **caractérisée en ce qu'**un palier de glissement et/ou une douille de glissement (29) est disposé dans le boîtier (18) coaxialement à l'axe longitudinal de tige.

15. Pince parallèle électrique comprenant une barre de traction et/ou de pression (1) selon une des revendications 1 à 6, comprenant au moins deux bras de pince (38) dont au moins un peut être actionné avec la barre de traction et/ou de pression (1), comprenant un moteur électrique (17) couplé de manière solidaire en rotation au moins indirectement à un élément de positionnement (31), ainsi que comprenant un organe de commande (3) qui est disposé sur l'élément de positionnement (31) et qui agit dans la came de commande (2) de la barre de traction et/ou de pression (1) pour un déplacement axial entre une position fermée et une position ouverte.
